(19) Europäisches Patentamt
European Patent Office
Office européen des brevets

(11) **EP 4 270 265 A1**

(12) **EUROPEAN PATENT APPLICATION**
published in accordance with Art. 153(4) EPC

(43) Date of publication:
**01.11.2023 Bulletin 2023/44**

(21) Application number: **20967058.7**

(22) Date of filing: **25.12.2020**

(51) International Patent Classification (IPC):
***G06N 20/00*** (2019.01)

(52) Cooperative Patent Classification (CPC):
**G06N 20/00**

(86) International application number:
**PCT/JP2020/049016**

(87) International publication number:
**WO 2022/137573 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
• **GOTO, Keisuke
Kawasaki-shi, Kanagawa 211-8588 (JP)**
• **SUZUKI, Hirofumi
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **INFORMATION PROCESSING PROGRAM, INFORMATION PROCESSING METHOD, AND INFORMATION PROCESSING DEVICE**

(57)     An information processing program for causing a computer to execute processing including: acquiring evaluation for any variable that appears in at least any mathematical model of a plurality of mathematical models among a plurality of variables; specifying a frequency of appearance of each variable of the plurality of variables in each mathematical model of the plurality of mathematical models; and determining evaluation for the each mathematical model based on an importance level for the any variable set according to the acquired evaluation and the specified frequency.

## FIG. 10

500

| VARIABLE | x1 | x2 | x3 | x4 | x5 |
|---|---|---|---|---|---|
| IMPORTANCE LEVEL wi | 0.5 | 0 | 0 | 0 | 0 |

700

| MODEL | m1 | m2 | m3 | m4 | m5 | SCORE | RANKING |
|---|---|---|---|---|---|---|---|
| M1 | 1 | 1 | 0 | 0 | 1 | 1/6 | 2 |
| M2 | 0 | 0 | 2 | 1 | 0 | 0 | 3 |
| M3 | 0 | 1 | 0 | 1 | 0 | 0 | 3 |
| M4 | 1 | 1 | 0 | 0 | 0 | 1/4 | 1 |

PLEASE SET IMPORTANCE LEVEL w1 OF x1, SET [-1, 1] — 100

w1=0.5

REPEAT SETTING

EP 4 270 265 A1

**Description**

FIELD

The present disclosure relates to an information processing program, an information processing method, and an information processing device.

BACKGROUND

Conventionally, it is sometimes desired to analyze regularity or the like that appears in data, using machine learning. Here, for example, in a case where a plurality of mathematical models is conceivable for analyzing the regularity or the like that appears in data, a user selects a mathematical model that the user considers appropriate from among the plurality of mathematical models, and analyzes the regularity or the like that appears in data, using the selected mathematical model.

As conventional art, for example, there is a technique of listing a plurality of mathematical models with relatively high accuracy in descending order. Furthermore, for example, there is a technique of creating a plurality of models with relatively high accuracy.

SUMMARY

TECHNICAL PROBLEM

However, in an existing technique, it is not possible to determine evaluation for each mathematical model in consideration of importance of variables that appear in the mathematical model. For this reason, the user examines each mathematical model, and considers which mathematical model is appropriate in analyzing the regularity or the like that appears in data, which leads to an increase in work load on the user when selecting the mathematical model that the user considers appropriate.

In one aspect, an object of the present invention is to determine evaluation for a mathematical model in consideration of importance of a variable.

SOLUTION TO PROBLEM

According to one embodiment, an information processing program, an information processing method, and an information processing device are proposed, which acquire evaluation for any variable that appears in at least any mathematical model of a plurality of mathematical models among a plurality of variables; specify a frequency of appearance of each variable of the plurality of variables in each mathematical model of the plurality of mathematical models; and determine evaluation for the each mathematical model based on importance level for the any variable set according to the acquired evaluation and the specified frequency.

ADVANTAGEOUS EFFECTS OF INVENTION

According to one aspect, it becomes possible to determine evaluation for a mathematical model in consideration of importance of a variable.

BRIEF DESCRIPTION OF DRAWINGS

FIG. 1 is an explanatory diagram illustrating an example of an information processing method according to an embodiment.
FIG. 2 is an explanatory diagram illustrating an example of an information processing system 200.
FIG. 3 is a block diagram illustrating a hardware configuration example of an information processing device 100.
FIG. 4 is an explanatory table illustrating an example of content stored in a coefficient management table 400.
FIG. 5 is an explanatory table illustrating an example of content stored in an importance level management table 500.
FIG. 6 is an explanatory table illustrating an example of content stored in a frequency management table 600.
FIG. 7 is an explanatory table illustrating an example of content stored in an evaluation management table 700.
FIG. 8 is a block diagram illustrating a functional configuration example of the information processing device 100.
FIG. 9 is an explanatory diagram (part 1) illustrating an operation example 1 of the information processing device 100.

FIG. 10 is an explanatory diagram (part 2) illustrating the operation example 1 of the information processing device 100.

FIG. 11 is an explanatory diagram (part 3) illustrating the operation example 1 of the information processing device 100.

FIG. 12 is an explanatory diagram (part 4) illustrating the operation example 1 of the information processing device 100.

FIG. 13 is an explanatory diagram (part 5) illustrating the operation example 1 of the information processing device 100.

FIG. 14 is an explanatory diagram illustrating an operation example 2 of the information processing device 100.

FIG. 15 is an explanatory table illustrating an operation example 3 of the information processing device 100.

FIG. 16 is an explanatory table (part 1) illustrating an operation example 4 of the information processing device 100.

FIG. 17 is an explanatory diagram (part 2) illustrating the operation example 4 of the information processing device 100.

FIG. 18 is an explanatory diagram (part 3) illustrating the operation example 4 of the information processing device 100.

FIG. 19 is an explanatory diagram (part 4) illustrating the operation example 4 of the information processing device 100.

FIG. 20 is a flowchart illustrating an example of an overall processing procedure.

DESCRIPTION OF EMBODIMENTS

Hereinafter, an embodiment of an information processing program, an information processing method, and an information processing device will be described in detail with reference to the drawings.

(Example of Information Processing Method According to Embodiment)

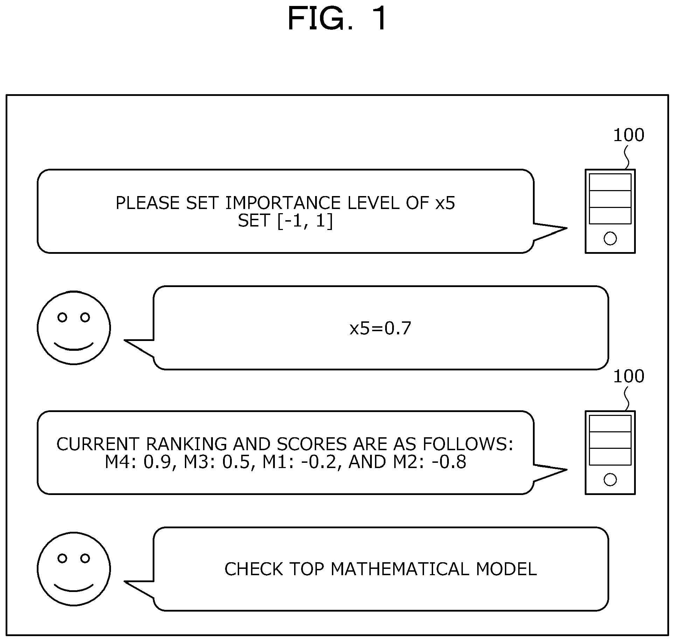

FIG. 1 is an explanatory diagram illustrating an example of an information processing method according to an embodiment. An information processing device 100 is a computer for determining evaluation for a mathematical model. The mathematical model is, for example, a model that analyzes the regularity or the like that appears in data.

Here, in a case where a plurality of mathematical models is conceivable for analyzing the regularity or the like that appears in data, a user selects a mathematical model that the user considers appropriate from among the plurality of mathematical models, and analyzes the regularity or the like that appears in data, using the selected mathematical model.

However, in an existing technique, in the case where a plurality of mathematical models is conceivable for analyzing the regularity or the like that appears in data, it is not possible to determine evaluation for each mathematical model in consideration of importance of variables that appear in the each mathematical model.

Therefore, the user cannot refer to the evaluation for each mathematical model when selecting the mathematical model that the user considers appropriate from among the plurality of mathematical models. Therefore, the user manually examines content of each mathematical model, and considers which mathematical model is appropriate in analyzing the regularity or the like that appears in data. Then, the examination and consideration incurs an increase in work load on the user when selecting the mathematical model that the user considers appropriate.

Specifically, the user examines the content of each mathematical model, considers what kind of variable appears and which kind of variable is how to be calculated, and the like, and selects an intuitively appropriate mathematical model that the user feels right in a mechanism that analyzes the regularity or the like that appears in data. More specifically, it is conceivable that the user selects the mathematical model that has the mechanism that analyzes the regularity or the like that appears in data being not too simple and the user considers appropriate from among the plurality of mathematical models. Furthermore, it is conceivable that the user selects a mathematical model other than a mathematical model in which a large number of variables are complicatedly calculated and having a mechanism that analyzes the regularity or the like that appears in data being difficult to understand from among the plurality of mathematical models.

Therefore, in the present embodiment, an information processing method capable of determining evaluation for a mathematical model in consideration of importance of a variable will be described.

In FIG. 1, the information processing device 100 includes a plurality of mathematical models. The mathematical model is formed using one or more variables. Different mathematical models may use the same variable. The mathematical model may include a term in which two or more variables are combined. In the example of FIG. 1, it is assumed that a mathematical model M1, a mathematical model M2, a mathematical model M3, and a mathematical model M4 are present. In the examples of FIG. 1, it is assumed that each of a variable $x1$, a variable $x2$, a variable $x3$, a variable $x4$, and a variable $x5$ is used in at least any one of the mathematical models.

The information processing device 100 acquires evaluation for any variable that appears in at least any mathematical model of the plurality of mathematical models from among the plurality of variables. The variable to be evaluated is selected by the information processing device 100, for example. For example, the information processing device 100 selects any variable of the plurality of variables, and outputs an inquiry about the evaluation for the selected variable to the user, thereby acquiring the evaluation for the selected variable.

In the example of FIG. 1, the information processing device 100 outputs an inquiry about the evaluation for the variable x5 to the user. Then, the information processing device 100 acquires the evaluation for the variable x5 from the user. The evaluation is, for example, an importance level for the variable. For example, the information processing device 100 acquires the importance level for the variable x5 as the evaluation for the variable x5 from the user.

(1-2) The information processing device 100 specifies a frequency of appearance of each variable of the plurality of variables in each mathematical model of the plurality of mathematical models. The frequency is, for example, the number of appearances. In the example of FIG. 1, the information processing device 100 specifies the frequency of appearance of each of the variable x1, the variable x2, the variable x3, the variable x4, and the variable x5 in the mathematical model M1, the mathematical model M2, the mathematical model M3, and the mathematical model M4.

(1-3) The information processing device 100 determines the evaluation for each mathematical model based on the importance level for any variable set according to the acquired evaluation and the specified frequency. The evaluation for the mathematical model is expressed by, for example, a score. For example, the information processing device 100 determines the evaluation for each mathematical model based on the importance level for each variable and the specified frequency.

Among the importance levels for the respective variables, the importance level for any variable for which evaluation has been acquired is, for example, the importance level set according to the evaluation. Among the importance levels for the respective variables, the importance levels for the variables other than the any variable for which evaluation has been acquired are, for example, prescribed importance levels set in advance. For example, the information processing device 100 determines a total value obtained by adding products of the importance level and the frequency of each variable that appears in the mathematical model, as the score for the mathematical model.

Thereby, the information processing device 100 can determine the evaluation for the mathematical model in consideration of the importance of the variables. For example, the information processing device 100 can determine the evaluation for each mathematical model such that the evaluation becomes relatively high for the mathematical model that the user are more likely to intuitively feel right in the mechanism that analyzes the regularity or the like that appears in data. For example, the information processing device 100 can determine the evaluation for each mathematical model such that the evaluation becomes relatively high for the mathematical model that the user are more likely to intuitively consider that the mechanism that analyzes the regularity or the like that appears in data is not too simple.

For example, the information processing device 100 can determine the evaluation for each mathematical model such that the evaluation becomes relatively low for the mathematical model in which a large number of variables are complicatedly calculated, and having the mechanism that analyzes the regularity or the like that appears in data being difficult to understand. In this manner, the information processing device 100 can determine the evaluation for each mathematical model such that the evaluation for the mathematical model determined that the user is more likely to intuitively consider appropriate becomes high in consideration of importance of the variables, and enable the user to use the evaluation.

(1-4) The information processing device 100 outputs the determined evaluation for each mathematical model in a graspable manner for the user. In the example of FIG. 1, the information processing device 100 outputs a ranking table that displays the mathematical model M1, the mathematical model M2, the mathematical model M3, and the mathematical model M4 arranged in descending order of scores and the respective scores in a graspable manner for the user.

Thereby, the information processing device 100 can enable the user to grasp the evaluation for each mathematical model determined in consideration of the importance of the variable that appears in the each mathematical model. Therefore, the information processing device 100 can enable the user to easily select the mathematical model that the user considers appropriate from among the plurality of mathematical models, and can enable an analysis of the regularity or the like that appears in data, using the selected mathematical model. For example, the information processing device 100 can enable the user to grasp the mathematical model determined that the user is more likely to intuitively consider appropriate in consideration of the importance of the variables, can enable the user to easily select the mathematical model that the user considers appropriate, and can reduce the work load on the user.

For example, the user checks the mathematical models in order from top of the ranking table based on the evaluation for each mathematical model, thereby finding the mathematical model that the user intuitively considers appropriate at an early stage. Specifically, the user can refer to the evaluation for each mathematical model by determining the evaluation for at least any variable. Therefore, specifically, the user can find the mathematical model that the user intuitively considers appropriate without examining all the plurality of mathematical models.

More specifically, the user can relatively easily select the intuitively appropriate mathematical model that the user feels right in the mechanism that analyzes the regularity or the like that appears in data. The feeling right tends to increase, for example, when the mechanism is not too obvious and the mechanism is not too complicated and can be understood by an expert. More specifically, the user can relatively easily select the mathematical model that has the mechanism that analyzes the regularity or the like that appears in data being not too simple and the user considers appropriate from among the plurality of mathematical models. More specifically, the user can relatively easily select a mathematical model other than the mathematical model in which a large number of variables are complicatedly operated and having the mechanism that analyzes the regularity or the like that appears in data is difficult to understand from among the plurality of mathematical models.

Here, a case where the information processing device 100 outputs the inquiry about the evaluation for the variable to the user has been described, but the present embodiment is not limited to the case. For example, there may be a case where the information processing device 100 acquires the evaluation for any variable according to an evaluation rule determined in advance by the user. Furthermore, for example, there may be a case where the information processing device 100 acquires the evaluation associated with a type of any variable based on the evaluation for each type of variable associated in advance by the user. Furthermore, for example, there may be a case where the information processing device 100 acquires the evaluation for any variable based on the evaluation for each variable determined in advance by the user.

Here, a case where the information processing device 100 outputs the inquiry about the evaluation for any one variable to the user has been described, but the present embodiment is not limited to the case. For example, there may be a case where the information processing device 100 outputs the inquiry about the evaluation for each variable of two or more variables to the user.

Here, a case where the information processing device 100 outputs the ranking table that displays the plurality of mathematical models arranged in descending order of scores and the respective scores in a graspable manner for the user has been described, but the embodiment is not limited to the case. For example, there may be a case where the information processing device 100 outputs the ranking table in a graspable manner for the user and does not output the respective scores. Furthermore, for example, there may be a case where the information processing device 100 outputs only a mathematical model with a relatively high score among the plurality of mathematical models in a graspable manner for the user.

Here, a case where the information processing device 100 selects any variable of the plurality of variables, and outputs the inquiry about the evaluation for the selected variable to the user has been described, but the present embodiment is not limited to the case. For example, there may be a case where the user selects any variable of the plurality of variables and causes the information processing device 100 to acquire the evaluation for the selected variable.

Here, a case where the information processing device 100 acquires the importance level for the variable as the evaluation for the variable from the user has been described, but the present embodiment is not limited to the case. For example, there may be a case where the information processing device 100 sets the importance level for the variable based on the evaluation for the variable from the user. Specifically, there may be a case where the information processing device 100 accepts designation of any one of high evaluation, intermediate evaluation, low evaluation, or the like as the evaluation for the variable from the user, and sets the importance level for the variable based on a result of the designation.

Here, a case where the information processing device 100 determines the evaluation for each mathematical model based on the importance level for each variable of the plurality of variables has been described, but the embodiment is not limited to the case. For example, there may be a case where the information processing device 100 determines the evaluation for each mathematical model without using the importance levels for the variables other than the any variable for which the evaluation has been acquired.

(Example of Information Processing System 200)

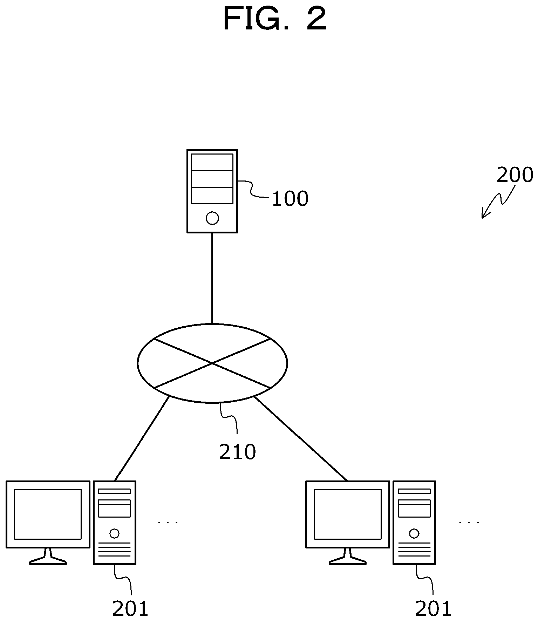

Next, an example of an information processing system 200 to which the information processing device 100 illustrated in FIG. 1 is applied will be described with reference to FIG. 2.

FIG. 2 is an explanatory diagram illustrating an example of the information processing system 200. In FIG. 2, the information processing system 200 includes the information processing device 100 and client devices 201.

In the information processing system 200, the information processing device 100 and the client devices 201 are coupled via a wired or wireless network 210. The network 210 is, for example, a local area network (LAN), a wide area network (WAN), the Internet, or the like.

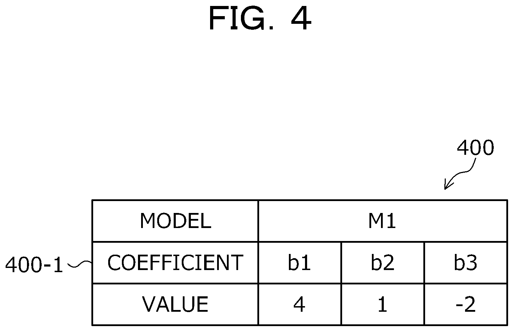

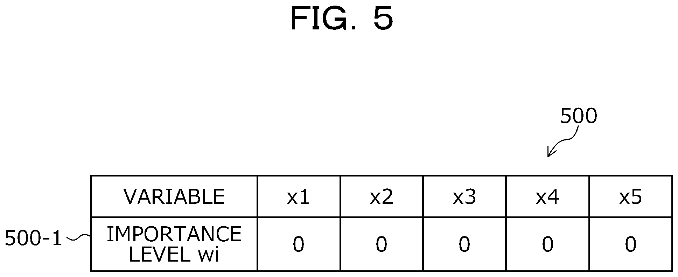

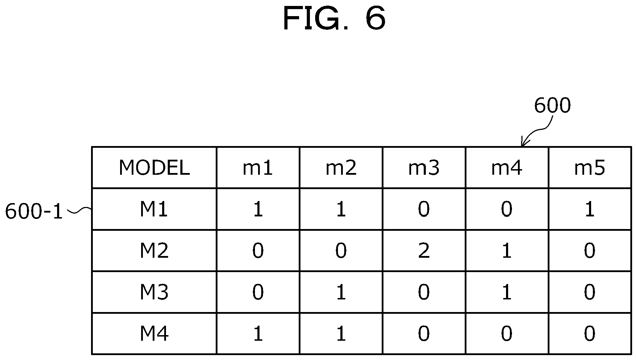

The information processing device 100 stores a plurality of mathematical models. For example, the information processing device 100 stores a coefficient regarding a term in each mathematical model of the plurality of mathematical models, using a coefficient management table 400 to be described below with reference to FIG. 4. The information processing device 100 stores, for example, the importance level for each variable of the plurality of variables, using an importance level management table 500 to be described below with reference to FIG. 5. The importance level is, for example, a predetermined value determined in advance in an initial state. The information processing device 100 specifies a frequency of appearance of each variable of the plurality of variables in each mathematical model of the plurality of mathematical models. The information processing device 100 stores the specified frequency using a frequency management table 600 to be described below with reference to FIG. 6.

The information processing device 100 receives a request to calculate the score that indicates the evaluation for each mathematical model from the client device 201. The information processing device 100 transmits the inquiry about the evaluation for any variable that appears in at least any mathematical model of the plurality of mathematical models among the plurality of variables to the client device 201 in response to the reception of the request to calculate the score. The information processing device 100 receives the evaluation for any variable from the client device 201, and sets the importance level for the any variable according to the evaluation for the any variable. The information processing device 100 stores the set importance level, using the importance level management table 500 to be described below with reference to FIG. 5.

The information processing device 100 calculates the score that indicates the evaluation for each mathematical model based on the importance level for each variable and the specified frequency. The information processing device 100 transmits the calculated score and the ranking table that displays the plurality of mathematical models in descending order of evaluation to the client device 201. Thereby, the information processing device 100 can calculate the score in consideration of the user's intuitive evaluation for the variable, the score being used as a reference in selecting the mathematical model that the user considers appropriate so that the user can easily select the mathematical model that the user considers appropriate.

The information processing device 100 may further newly acquire the evaluation for the variable. The information processing device 100 receives, for example, a request to calculate again the score that indicates the evaluation for each mathematical model from the client device 201. In response to the reception of the request to calculate the score, the information processing device 100 transmits the inquiry about the evaluation for any variable to the client device 201, and calculates the score that indicates the evaluation for each mathematical model, similarly to the above description. The information processing device 100 is, for example, a server, a personal computer (PC), or the like.

When accepting an inquiry about evaluation for any variable, the client device 201 determines evaluation for the any variable based on a user's operation input and transmits the evaluation to the information processing device 100. The client device 201 receives the evaluation for each mathematical model and the ranking table that displays the plurality of mathematical models arranged in descending order of the evaluation from the information processing device 100, and outputs the evaluation and the ranking table in a graspable manner for the user. Thereby, the client device 201 can facilitate the user to select the mathematical model that the user considers appropriate.

The client device 201 may transmit the request to calculate again the score that indicates the evaluation for each mathematical model to the information processing device 100 based on the user's operation input. The client device 201 receives again the evaluation for each mathematical model and the ranking table that displays the plurality of mathematical models arranged in descending order of the evaluation from the information processing device 100, and outputs the evaluation and the ranking table in a graspable manner for the user. Thereby, the client device 201 can facilitate the user to select the mathematical model that the user considers appropriate. The client device 201 is, for example, a PC, a tablet terminal, or a smartphone.

Here, a case where the information processing device 100 and the client device 201 are different devices has been described, but the present embodiment is not limited to the case. For example, there may be a case where the information processing device 100 has a function as the client device 201. In this case, the information processing system 200 may not include the client device 201.

(Hardware Configuration Example of Information Processing Device 100)

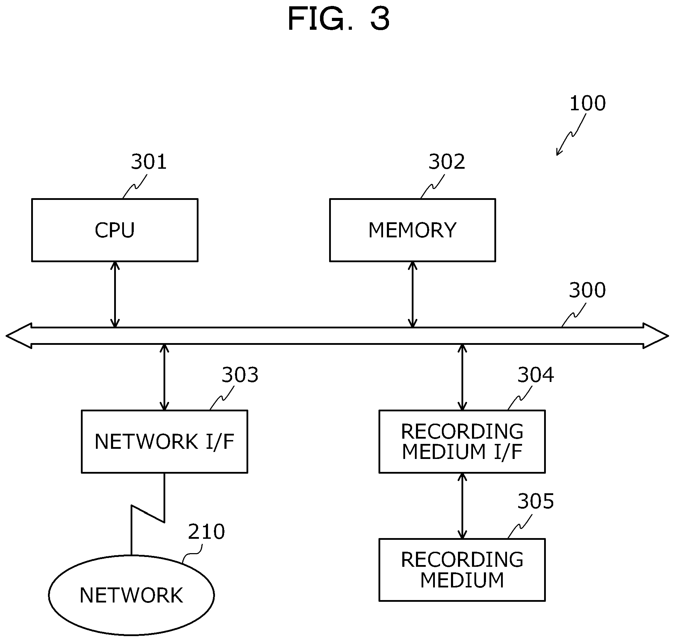

Next, a hardware configuration example of the information processing device 100 will be described with reference to FIG. 3.

FIG. 3 is a block diagram illustrating the hardware configuration example of the information processing device 100. In FIG. 3, the information processing device 100 includes a central processing unit (CPU) 301, a memory 302, a network interface (I/F) 303, a recording medium I/F 304, and a recording medium 305. Furthermore, the individual configuration units are coupled to each other by a bus 300.

Here, the CPU 301 performs overall control of the information processing device 100. The memory 302 includes, for example, a read only memory (ROM), a random access memory (RAM), a flash ROM, or the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 210 through a communication line and is coupled to another computer via the network 210. Then, the network I/F 303 conducts an interface between the network 210 and the inside, and controls input/output of data to/from the another computer. For example, the network I/F 303 is a modem, a LAN adapter, or the like.

The recording medium I/F 304 controls read/write of data from/to the recording medium 305 under the control of the CPU 301. The recording medium I/F 304 is, for example, a disk drive, a solid state drive (SSD), a universal serial bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be attachable to and detachable from the information processing device 100.

The information processing device 100 may include, for example, a keyboard, a mouse, a display, a printer, a scanner, a microphone, or a speaker, in addition to the above-described configuration units Furthermore, the information processing device 100 may include a plurality of the recording medium I/Fs 304 and recording media 305. Furthermore, the information processing device 100 does not have to include the recording medium I/F 304 or the recording medium 305.

(Content Stored in Coefficient Management Table 400)

Next, an example of content stored in the coefficient management table 400 will be described with reference to FIG. 4. The coefficient management table 400 is implemented by a storage area such as the memory 302 or the recording medium 305 of the information processing device 100 illustrated in FIG. 3, for example.

FIG. 4 is an explanatory table illustrating an example of content stored in the coefficient management table 400. As illustrated in FIG. 4, the coefficient management table 400 includes fields of model, coefficient, and value. In the coefficient management table 400, coefficient management information is stored as a record 400-a by setting information in each field for each coefficient, a is an arbitrary integer.

In the field of model, a model name that identifies any one of the plurality of mathematical models is set. The model name is, for example, M1. In the field of the coefficient, a coefficient name that identifies the coefficient that appears in the above-described mathematical model is set. The coefficient name is, for example, b1. In the field of value, a value of the above-described coefficient is set.

(Content Stored in Importance Level Management Table 500)

Next, an example of content stored in the importance level management table 500 will be described with reference to FIG. 5. The importance level management table 500 is implemented by the storage area such as the memory 302 or the recording medium 305 of the information processing device 100 illustrated in FIG. 3, for example.

FIG. 5 is an explanatory table illustrating an example of content stored in the importance level management table 500. As illustrated in FIG. 5, the importance level management table 500 includes fields of variable and importance level $w_i$. In the importance level management table 500, importance level management information is stored as a record 500-b by setting information in each field for each variable. b is an arbitrary integer.

In the field of variable, a variable name that identifies the variable that appears in at least any mathematical model is set. The variable name is, for example, x1. In the field of importance level $w_i$, the importance level $w_i$ for the above-described variable is set. The importance level $w_i$ is, for example, a predetermined value in the initial state. The importance level $w_i$ is set, for example, in accordance with user's evaluation for the variable.

(Content Stored in Frequency Management Table 600)

Next, an example of content stored in the frequency management table 600 will be described with reference to FIG. 6. The frequency management table 600 is implemented by the storage area such as the memory 302 or the recording medium 305 of the information processing device 100 illustrated in FIG. 3, for example.

FIG. 6 is an explanatory table illustrating an example of content stored in the frequency management table 600. As illustrated in FIG. 6, the frequency management table 600 has fields of model and $m_i$. i is a natural number. In the example of FIG. 6, i = 1 to 5. In the frequency management table 600, frequency management information is stored as a record 600-c by setting information in each field for each variable. c is an arbitrary integer.

In the field of model, a model name that identifies any one of the plurality of mathematical models is set. The model name is, for example, M1. In the field of $m_i$, a frequency $m_i$ of appearance of a variable $x_i$ is set in the above-described any mathematical model. The frequency is, for example, the number of appearances.

(Content Stored in Evaluation Management Table 700)

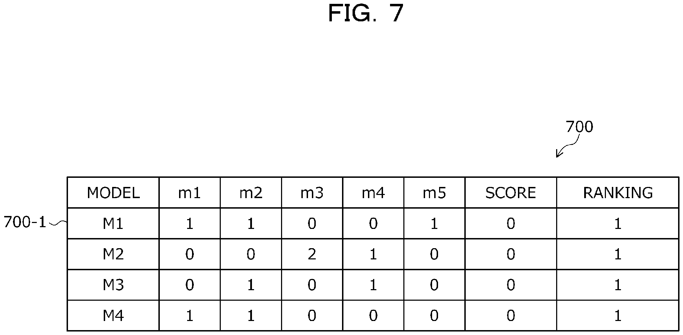

Next, an example of content stored in an evaluation management table 700 will be described with reference to FIG. 7. The evaluation management table 700 is implemented by the storage area such as the memory 302 or the recording medium 305 of the information processing device 100 illustrated in FIG. 3, for example.

FIG. 7 is an explanatory table illustrating an example of content stored in the evaluation management table 700. As illustrated in FIG. 7, the evaluation management table 700 includes fields of model, $m_i$, score, and ranking, i is a natural number. In the example of FIG. 7, i = 1 to 5. In the evaluation management table 700, score management information is stored as a record 700-d by setting information in each field for each mathematical model. d is an arbitrary integer.

In the field of model, a model name that identifies any one of the plurality of mathematical models is set. The model name is, for example, M1. In the field of mi, the frequency mi of appearance of the variable xi is set in the above-described any mathematical model. The frequency is, for example, the number of appearances. In the field of score, the score of the above-described any mathematical model, the score having been calculated based on the importance level wi and the frequency mi, is set. In the field of ranking, the rank order of the above-described any mathematical model when the plurality of mathematical models is arranged in descending order of the scores is set.

(Functional Configuration Example of Information Processing Device 100)

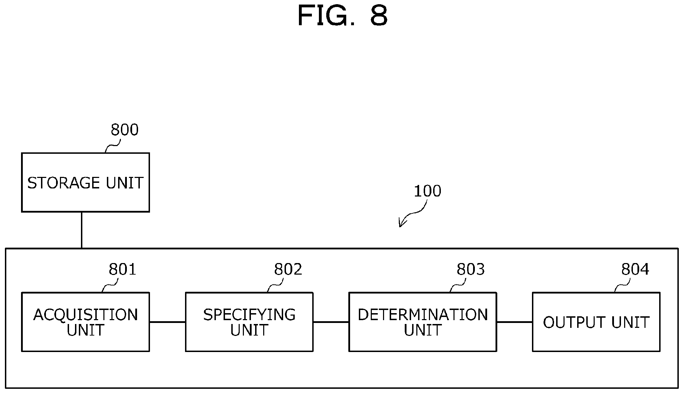

Next, a functional configuration example of the information processing device 100 will be described with reference to FIG. 8.

FIG. 8 is a block diagram illustrating a functional configuration example of the information processing device 100. The information processing device 100 includes a storage unit 800, an acquisition unit 801, a specifying unit 802, a determination unit 803, and an output unit 804.

The storage unit 800 is implemented by, for example, the storage area such as the memory 302 or the recording medium 305 illustrated in FIG. 3. Hereinafter, a case where the storage unit 800 is included in the information processing device 100 will be described. However, the embodiment is not limited to this case. For example, there may be a case where the storage unit 800 is included in a device different from the information processing device 100, and the content stored in the storage unit 800 can be referred to from the information processing device 100.

The acquisition unit 801 to the output unit 804 function as an example of a control unit. Specifically, the acquisition unit 801 to the output unit 804 implement functions thereof by causing the CPU 301 to execute a program stored in the storage area such as the memory 302 or the recording medium 305 or by the network I/F 303 illustrated in FIG. 3, for example. A processing result of each functional unit is stored in, for example, the storage area such as the memory 302 or the recording medium 305 illustrated in FIG. 3.

The storage unit 800 stores various types of information to be referred to or updated in the processing of each functional unit. The storage unit 800 stores the plurality of mathematical models. The mathematical model is implemented using, for example, a term formed by one or more variables and a coefficient according to the term. The mathematical model includes, for example, a term formed by combining two or more variables among the plurality of variables. The mathematical model is, for example, a linear model. The storage unit 800 stores, for example, the coefficient regarding the term that forms the mathematical model, using the coefficient management table 400.

The storage unit 800 stores the importance level for each variable of the plurality of variables. The importance level is, for example, a predetermined value determined in advance in the initial state. The importance level is set by the acquisition unit 801, for example, according to the evaluation for the variable. The storage unit 800 stores, for example, the importance level for each variable of the plurality of variables, using the importance level management table 500.

The storage unit 800 stores the frequency of appearance of each variable of the plurality of variables in each mathematical model of the plurality of mathematical models. The frequency is specified by the specifying unit 802, for example. The frequency is, for example, the number of appearances of the variable in the mathematical model. The frequency may be, for example, a ratio of the number of times any variable appears to the number of times the plurality of variables appears in the mathematical model. The storage unit 800 stores, for example, the frequency of appearance of each variable of the plurality of variables in each mathematical model of the plurality of mathematical models, using the frequency management table 600.

The storage unit 800 stores the evaluation for each mathematical model. The storage unit 800 stores, for example, the score that indicates the evaluation for each mathematical model. Specifically, the storage unit 800 stores the score that indicates the evaluation for each mathematical model, using the evaluation management table 700. The storage unit 800 stores the ranking table that displays the plurality of mathematical models arranged in descending order of evaluation. For example, the storage unit 800 stores the rank orders of each of the plurality of mathematical models of when the mathematical models are arranged in descending order of evaluations, using the evaluation management table 700.

The storage unit 800 may store information that enables conversion of an answer from the user that indicates the evaluation for a variable into the importance level for the variable. The storage unit 800 may store, for example, information in which the importance level is associated with each of high evaluation, intermediate evaluation, low evaluation, or the like, which will be the answer from the user that indicates the evaluation for a variable. Furthermore, the storage unit 800 may store, for example, information that enables conversion of an evaluation value that indicates the evaluation for the variable in a range from 0 to 100 into the importance level in a range from 0 to 1.

The acquisition unit 801 acquires various types of information to be used for the processing of each functional unit. The acquisition unit 801 stores the acquired various types of information in the storage unit 800 or outputs the acquired information to each functional unit. Furthermore, the acquisition unit 801 may output the various types of information stored in the storage unit 800 to each functional unit. The acquisition unit 801 acquires the various types of information based on, for example, the user's operation input of the information processing device 100. The acquisition unit 801 may receive the various types of information from a device different from the information processing device 100, for example.

The acquisition unit 801 acquires the evaluation for any variable that appears in at least any mathematical model of the plurality of mathematical models from among the plurality of variables. The evaluation is, for example, the importance level for the variable. For example, the acquisition unit 801 transmits the inquiry about the evaluation for any variable to the client device 201, thereby receiving the evaluation for the variable from the user from the client device 201. Thereby, the acquisition unit 801 can obtain the evaluation for the variable as information that serves as a guideline for determining the evaluation for each mathematical model in accordance with the user's sense.

For example, the acquisition unit 801 selects the variable that has not yet been selected from among the plurality of variables. Then, for example, every time the variable is selected, the acquisition unit 801 acquires the evaluation from the user for the variable selected this time. Specifically, every time the variable is selected, the acquisition unit 801 transmits the inquiry about the evaluation for the variable selected this time to the client device 201, thereby receiving the evaluation for the variable selected this time from the user from the client device 201. Thereby, the acquisition unit 801 can obtain the evaluation for each variable of two or more variables as the information that serves as a guideline for determining the evaluation for each mathematical model in accordance with the user's sense. Furthermore, the acquisition unit 801 can avoid selecting the already selected variable again, and can reduce the work load on the user.

For example, the acquisition unit 801 selects the variable that has not yet been selected in a case where the variable that has not yet been selected remains among the plurality of variables. Then, for example, every time the variable is selected, the acquisition unit 801 acquires the evaluation from the user for the variable selected this time. Thereby, the acquisition unit 801 can obtain the evaluation for each variable of two or more variables as the information that serves as a guideline for determining the evaluation for each mathematical model in accordance with the user's sense. Furthermore, the acquisition unit 801 can avoid selecting the already selected variable again, and can reduce the work load on the user.

For example, the acquisition unit 801 selects the variable that has not yet been selected from among the plurality of variables in response to an instruction from the user. Then, for example, every time the variable is selected, the acquisition unit 801 acquires the evaluation from the user for the variable selected this time. Thereby, the acquisition unit 801 can obtain the evaluation for each variable of two or more variables as the information that serves as a guideline for determining the evaluation for each mathematical model in accordance with the user's sense. Furthermore, the acquisition unit 801 can control how many variables the evaluation is acquired for in accordance with the instruction from the user, and can reduce the work load on the user.

For example, the acquisition unit 801 specifies the degree of variation in the evaluation for each mathematical model in a case where the evaluation for each variable from the user satisfies a predetermined condition. The predetermined condition is that, for example, the importance level corresponding to the evaluation for each variable from the user is a predetermined value. The importance level is -1 to +1. The predetermined value is -1 or +1. The predetermined condition may be that, for example, an option of high evaluation or low evaluation has been designated as the evaluation.

Then, for example, the acquisition unit 801 selects the variable with the specified degree of variation that is relatively high from among the variables included in the plurality of variables and which have not yet been selected. Specifically, the acquisition unit 801 selects the variable having the maximum degree of variation. Furthermore, specifically, in a case where there are two or more variables having the maximum degree of variation, the acquisition unit 801 may randomly select the variable from among the variables having the maximum degree of variation. Furthermore, specifically, the acquisition unit 801 may randomly select the variable from among the variables with the degree of variation that is equal to or greater than a certain value. Then, for example, every time the variable is selected, the acquisition unit 801 acquires the evaluation from the user for the variable selected this time.

Thereby, the acquisition unit 801 can select the variable in consideration of which variable has a relatively large degree of variation in the evaluation for the mathematical model in the case where the variable has relatively high evaluation or relatively low evaluation. For example, the acquisition unit 801 can improve a probability that the user can easily select the mathematical model when determining the evaluation for the selected variable. Then, the acquisition unit 801 can determine the evaluation for each mathematical model so that the user can easily select the mathematical model that the user intuitively considers appropriate.

For example, the acquisition unit 801 specifies an amount in which each variable appears in the plurality of mathematical models. The amount of appearance is, for example, the number of times of appearance. Then, for example, the acquisition unit 801 selects the variable with the specified amount that is relatively large from among the variables included in the plurality of variables and which have not yet been selected. Specifically, the acquisition unit 801 selects the variable with the largest specified amount. Furthermore, specifically, in a case where there are two or more variables with the largest specified amount, the acquisition unit 801 may randomly select the variable from among the variables with the largest specified amount. Furthermore, specifically, the acquisition unit 801 may randomly select the variable from among the variables with the specified amount that is equal to or greater than a threshold. For example, every time the variable is selected, the acquisition unit 801 acquires the evaluation from the user for the variable selected this time.

Thereby, the acquisition unit 801 can select any variable in consideration of which variable has a relatively large number of mathematical models on which the variable has an influence. For example, the acquisition unit 801 can improve a probability that the user can easily select the mathematical model when determining the evaluation for the selected variable. Then, the acquisition unit 801 can determine the evaluation for each mathematical model so that the user can easily select the mathematical model that the user intuitively considers appropriate.

For example, the acquisition unit 801 randomly selects the variable included in the plurality of variables and which has not yet been selected. Then, for example, every time the variable is selected, the acquisition unit 801 acquires the evaluation from the user for the variable selected this time. Thereby, the acquisition unit 801 can obtain the evaluation for each variable of two or more variables as the information that serves as a guideline for determining the evaluation for each mathematical model in accordance with the user's sense. Furthermore, the acquisition unit 801 can avoid selecting the already selected variable again, and can reduce the work load on the user.

For example, the acquisition unit 801 accepts designation of any one of the plurality of mathematical models. The designation is performed by the user, for example. Specifically, the acquisition unit 801 receives designation of any one of the mathematical models from the client device 201. Thereby, the acquisition unit 801 can detect that, since the user has selected the mathematical model, it becomes a state where the determination unit 803 does not need to determine the evaluation for each mathematical model thereafter.

For example, the acquisition unit 801 selects the variable that has not yet been selected from among the plurality of variables until designation of any one of the plurality of mathematical models is accepted. Then, for example, every time the variable is selected, the acquisition unit 801 acquires the evaluation from the user for the variable selected this time. Thereby, the acquisition unit 801 can obtain the evaluation for each variable of two or more variables as the information that serves as a guideline for determining the evaluation for each mathematical model in accordance with the user's sense. Furthermore, the acquisition unit 801 can reduce a processing load since the determination unit 803 can avoid determining the evaluation for each mathematical model after the user has selected any mathematical model.

The acquisition unit 801 sets the importance level for any variable based on the evaluation of the any variable. The importance level is -1 to +1. For example, the acquisition unit 801 sets the evaluation for any variable as the importance level for the variable. Thereby, the acquisition unit 801 can obtain the information that serves as a guideline for determining the evaluation for each mathematical model.

For example, the acquisition unit 801 may acquire the answer from the user that indicates the evaluation for any variable, and set the importance level for the any variable based on the acquired answer with reference to the information that enables conversion of the answer into the importance level for the any variable. Specifically, the acquisition unit 801 accepts designation of any one of high evaluation, intermediate evaluation, low evaluation, or the like as the answer from the user that indicates the evaluation for the variable. Then, specifically, the acquisition unit 801 refers to the storage unit 800 and sets the importance level associated with any one of the designated high evaluation, intermediate evaluation, low evaluation, or the like as the importance level for the variable. Thereby, the acquisition unit 801 can obtain the information that serves as a guideline for determining the evaluation for each mathematical model.

The acquisition unit 801 may accept a start trigger to start the processing of any one of the functional units. The start trigger is, for example, a predetermined operation input by the user of the information processing device 100. The start trigger may be, for example, receipt of predetermined information from another computer. The start trigger may be, for example, output of predetermined information by any functional unit. For example, the acquisition unit 801 accepts acquisition of the evaluation for the variable as the start trigger to start the processing of the determination unit 803.

The specifying unit 802 specifies the frequency of appearance of each variable of the plurality of variables in each mathematical model of the plurality of mathematical models. For example, the specifying unit 802 specifies the number of times each variable appears in each mathematical model. Thereby, it is possible to obtain the information that serves as a guideline for determining the evaluation for each mathematical model.

The determination unit 803 determines the evaluation for each mathematical model based on the importance level for any variable set according to the acquired evaluation and the specified frequency. The evaluation for the mathematical model is indicated by, for example, a score. The evaluation for the mathematical model may be indicated using a stepwise level, for example, the high evaluation, intermediate evaluation, low evaluation, or the like. For example, for each mathematical model, the determination unit 803 calculates a product of the importance level for any variable set according to the acquired evaluation and the frequency of appearance of the variable in the mathematical model as the score that indicates the evaluation for the mathematical model. Thereby, the determination unit 803 can generate the information that serves as a guideline when the user selects the mathematical model that the user considers appropriate.

For example, every time the evaluation from the user is acquired, the determination unit 803 determines the evaluation for each mathematical model based on the importance level set according to the evaluation for the variable for which the evaluation from the user has been acquired among the plurality of variables and the specified frequency. Specifically, for each mathematical model, every time the evaluation from the user is acquired, the determination unit 803 calculates the product of the importance level for any variable set according to the acquired evaluation and the frequency of appearance of the variable in the mathematical model. Specifically, the determination unit 803 sets the calculated product as the score that indicates the evaluation for the mathematical model. Thereby, the determination unit 803 can generate the information that serves as a guideline when the user selects the mathematical model that the user considers appropriate.

The determination unit 803 determines the evaluation for each mathematical model based on the importance level for each variable and the specified frequency. The importance level for each variable includes the importance level for any variable set according to the acquired evaluation and the importance level set in advance for each variable of the remaining variables other than the any variable among the plurality of variables. For example, for each mathematical model, the determination unit 803 calculates a total of the products of the importance level for each variable and the frequency of appearance of the variable in the mathematical model as the score that indicates the evaluation for the mathematical model. Thereby, the determination unit 803 can generate the information that serves as a guideline when the user selects the mathematical model that the user considers appropriate.

For example, every time the evaluation is acquired from the user, the determination unit 803 determines the evaluation for each mathematical model based on the importance level for each variable and the specified frequency. Specifically, for each mathematical model, every time the evaluation from the user is acquired, the determination unit 803 sets the total of the products of the importance level for each variable and the frequency of appearance of the variable in the mathematical model as the score that indicates the evaluation for the mathematical model. Thereby, the determination unit 803 can generate the information that serves as a guideline when the user selects the mathematical model that the user considers appropriate.

The determination unit 803 determines the evaluation for each mathematical model based on the importance level for any variable set according to the acquired evaluation, the specified frequency, and the coefficient according to the term that appears in the each mathematical model. The determination unit 803 calculates, for example, the score that indicates the evaluation for each mathematical model based on the importance level for any variable set according to the acquired evaluation, the specified frequency, and the coefficient according to the term that appears in the each mathematical model. Thereby, the determination unit 803 can generate the information that serves as a guideline when the user selects the mathematical model that the user considers appropriate.

For example, every time the evaluation from the user is acquired, the determination unit 803 determines the evaluation for each mathematical model based on the importance level for each variable, the specified frequency, and the coefficient according to the term that appears in the each mathematical model. Specifically, every time the evaluation from the user is acquired, the determination unit 803 calculates the score that indicates the evaluation for each mathematical model based on the importance level for each variable, the specified frequency, and the coefficient according to the term that appears in the each mathematical model. Thereby, the determination unit 803 can generate the information that serves as a guideline when the user selects the mathematical model that the user considers appropriate.

The output unit 804 outputs a processing result of at least any one of the functional units. An output format is, for example, display on a display, print output to a printer, transmission to an external device by the network I/F 303, or storage in the storage area such as the memory 302 or the recording medium 305. Thereby, the output unit 804 enables notification of the processing result of at least any one of the functional units to the user of the information processing device 100 and can improve convenience of the information processing device 100.

The output unit 804 outputs information regarding each mathematical model in a mode corresponding to the evaluation determined for the mathematical model. For example, the output unit 804 outputs a ranking table that displays the information regarding each mathematical model arranged in descending order of the evaluation determined for the each mathematical model. Specifically, the output unit 804 causes the client device 201 to display the ranking table that displays the information regarding each mathematical model in descending order of the score calculated for the each mathematical model. Thereby, the output unit 804 can facilitate the user to select the mathematical model that the user considers appropriate.

For example, the output unit 804 displays the information regarding each mathematical model in a color corresponding to an evaluation level determined for the each mathematical model. Thereby, the output unit 804 can facilitate the user to select the mathematical model that the user considers appropriate.

The output unit 804 outputs the information regarding any mathematical model based on the evaluation determined for each mathematical model. The output unit 804 selectively displays, for example, the information regarding the mathematical model with evaluation equal to or higher than a certain level. Thereby, the output unit 804 can facilitate the user to select the mathematical model that the user considers appropriate.

The output unit 804 outputs information regarding the evaluation determined for each mathematical model. For example, the output unit 804 outputs the score calculated for each mathematical model in association with the mathematical model. Thereby, the output unit 804 can facilitate the user to select the mathematical model that the user considers appropriate.

Here, a case where the specifying unit 802 specifies the frequency of appearance of each variable in each mathematical model has been described, but the present embodiment is not limited to the case. For example, there may be a case where another computer specifies the frequency of appearance of each variable in each mathematical model. In this case, the acquisition unit 801 acquires the frequency of appearance of each variable in each mathematical model from the another computer. In this case, the information processing device 100 may not include the specifying unit 802.

Here, a case where the acquisition unit 801 acquires the evaluation for the variable by transmitting the inquiry about the evaluation for the variable has been described, but the present embodiment is not limited to the case. For example, there may be a case where the acquisition unit 801 acquires the evaluation for any variable according to an evaluation rule determined in advance by the user. Furthermore, for example, there may be a case where the acquisition unit 801 acquires the evaluation associated with the type of any variable based on the evaluation for each type of variable associated in advance by the user. Furthermore, for example, there may be a case where the acquisition unit 801 acquires the evaluation for any variable based on the evaluation for each variable determined in advance by the user.

(Operation Example 1 of Information Processing Device 100)

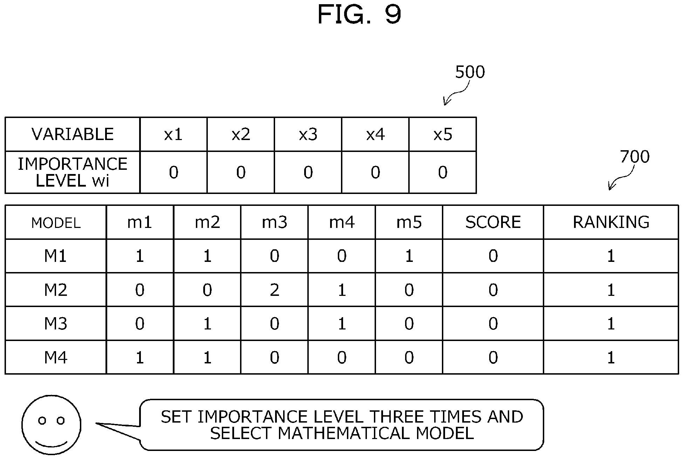

Next, an operation example 1 of the information processing device 100 will be described with reference to FIGs. 9 to 13.

FIGs. 9 to 13 are explanatory diagrams illustrating the operation example 1 of the information processing device 100. In the example of FIGs. 9 to 13, it is assumed that the mathematical model M1, the mathematical model M2, the mathematical model M3, and the mathematical model M4 are present. In the examples of FIGs. 9 to 13, it is assumed that each of the variable x1, the variable x2, the variable x3, the variable x4, and the variable x5 is used in at least any one of the mathematical models. The mathematical model is, for example, $y = b1*x1 + b2*x2 + b3*x3*x2$, or the like. The mathematical model may include a term in which two or more variables are combined.

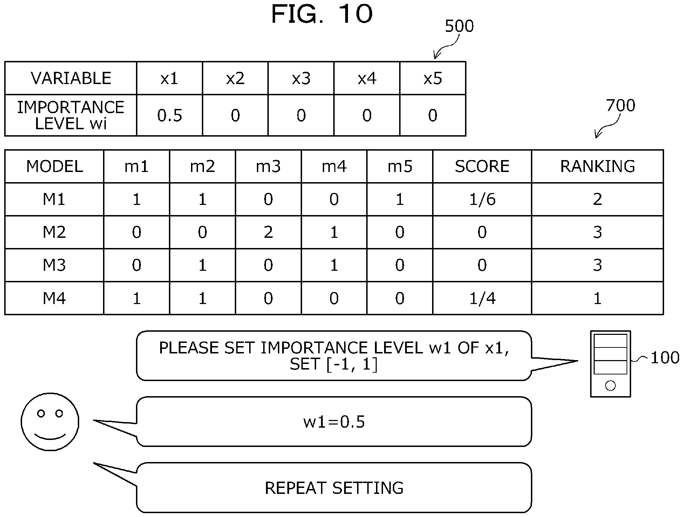

In FIG. 9, it is assumed that the information processing device 100 stores an initial value of the importance level for each of the variable x1, the variable x2, the variable x3, the variable x4, and the variable x5, using the importance level management table 500. The initial value is, for example, 0. Furthermore, it is assumed that the information processing device 100 stores the evaluation management table 700 in the initial state. The user intends to select the mathematical model by setting the importance level for the variable three times. Next, description proceeds to FIG. 10.

In FIG. 10, the information processing device 100 randomly selects any one of the variable x1, the variable x2, the variable x3, the variable x4, or the variable x5. In the example of FIG. 10, the information processing device 100 selects the variable x1. The information processing device 100 outputs an inquiry about the importance level for the variable x1, which is the evaluation for the selected variable x1, to the user. The inquiry includes, for example, a message "Please set the importance level w1 of x1, set [-1, 1]". For example, the information processing device 100 transmits the inquiry about the importance level for the variable x1 to the client device 201.

In the example of FIG. 10, the user sets $w1 = 0.5$. The client device 201 transmits $w1 = 0.5$ to the information processing device 100 based on the user's operation input. The information processing device 100 stores $w1 = 0.5$, using the importance level management table 500. The information processing device 100 refers to the importance level management table 500 and calculates the score that indicates the evaluation for each mathematical model. For example, the information processing device 100 calculates the score according to the following expression (1). $m_i$ is the number of $x_i$ that appears in the mathematical model. $w_i$ is the importance level [-1, 1] of $x_i$. $w_i$ is an initial value 0. $w_i$ is set by the user.

$$\text{The score} = (m1*w1 + m2*w2 + ... + mn*wn)/\Sigma mi \ ... \ (1)$$

The information processing device 100 stores the calculated score, using the evaluation management table 700. The information processing device 100 arranges the mathematical model M1, the mathematical model M2, the mathematical model M3, and the mathematical model M4 in descending order of the calculated scores. The information processing device 100 specifies the rank orders of the mathematical model M1, the mathematical model M2, the mathematical model M3, and the mathematical model M4 based on the arrangement result, and stores the rank orders, using the evaluation management table 700.

The information processing device 100 refers to the evaluation management table 700 and outputs the scores and the rank orders of the mathematical model M1, the mathematical model M2, the mathematical model M3, and the mathematical model M4 in a graspable manner for the user. The information processing device 100 transmits, for example, the scores and the rank orders of the mathematical model M1, the mathematical model M2, the mathematical model M3, and the mathematical model M4 to the client device 201.

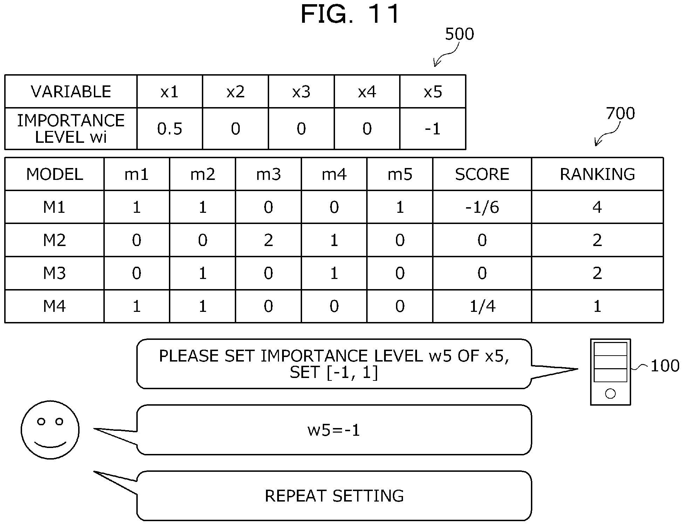

In the example of FIG. 10, the user further desires to set the importance levels for other variables. For example, the user desires to set the importance levels for other variables after referring to the scores and the rank orders of the mathematical model M1, the mathematical model M2, the mathematical model M3, and the mathematical model M4. For example, the user may desire to set the importance levels for other variables without referring to the scores and the rank orders of the mathematical model M1, the mathematical model M2, the mathematical model M3, and the mathematical model M4. The client device 201 transmits an instruction to repeat the setting to the information processing device 100 based on the user's operation input. Next, description proceeds to FIG. 11.

In FIG. 11, since the information processing device 100 has received the instruction to repeat the setting, the information processing device 100 randomly selects the variable that has not yet been selected from among the variable x1, the variable x2, the variable x3, the variable x4, and the variable x5. In the example of FIG. 11, the information processing device 100 selects the variable x5. The information processing device 100 outputs the inquiry about the importance level for the variable x5, which is the evaluation for the selected variable x5, to the user. For example, the information processing device 100 transmits the inquiry about the importance level for the variable x5 to the client device 201.

In the example of FIG. 11, the user sets w5 = -1. The client device 201 transmits w5 = -1 to the information processing device 100 based on the user's operation input. The information processing device 100 stores w5 = -1, using the importance level management table 500. The information processing device 100 refers to the importance level management table 500 and calculates the score that indicates the evaluation for each mathematical model. For example, the information processing device 100 calculates the score according to the above-described expression (1).

The information processing device 100 stores the calculated score, using the evaluation management table 700. The information processing device 100 arranges the mathematical model M1, the mathematical model M2, the mathematical model M3, and the mathematical model M4 in descending order of the calculated scores. The information processing device 100 specifies the rank orders of the mathematical model M1, the mathematical model M2, the mathematical model M3, and the mathematical model M4 based on the arrangement result, and stores the rank orders, using the evaluation management table 700.

The information processing device 100 refers to the evaluation management table 700 and outputs the scores and the rank orders of the mathematical model M1, the mathematical model M2, the mathematical model M3, and the mathematical model M4 in a graspable manner for the user. The information processing device 100 transmits, for example, the scores and the rank orders of the mathematical model M1, the mathematical model M2, the mathematical model M3, and the mathematical model M4 to the client device 201.

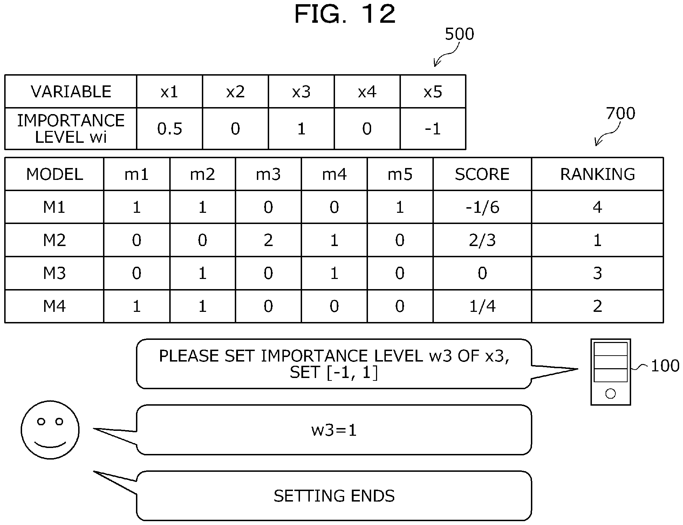

In the example of FIG. 11, the user further desires to set the importance levels for other variables. For example, the user desires to set the importance levels for other variables after referring to the scores and the rank orders of the mathematical model M1, the mathematical model M2, the mathematical model M3, and the mathematical model M4. For example, the user may desire to set the importance levels for other variables without referring to the scores and the rank orders of the mathematical model M1, the mathematical model M2, the mathematical model M3, and the mathematical model M4. The client device 201 transmits the instruction to repeat the setting to the information processing device 100 based on the user's operation input. Next, description proceeds to FIG. 12.

In FIG. 12, since the information processing device 100 has received the instruction to repeat the setting, the information processing device 100 randomly selects the variable that has not yet been selected from among the variable x1, the variable x2, the variable x3, the variable x4, and the variable x5. In the example of FIG. 12, the information processing device 100 selects the variable x3. The information processing device 100 outputs the inquiry about the importance level for the variable x3, which is the evaluation for the selected variable x3, to the user. For example, the information processing device 100 transmits the inquiry about the importance level for the variable x3 to the client device 201.

In the example of FIG. 12, the user sets w3 = 1. The client device 201 transmits w3 = 1 to the information processing device 100 based on the user's operation input. The information processing device 100 stores w3 = 1, using the importance level management table 500. The information processing device 100 refers to the importance level management table 500 and calculates the score that indicates the evaluation for each mathematical model. For example, the information processing device 100 calculates the score according to the above-described expression (1).

The information processing device 100 stores the calculated score, using the evaluation management table 700. The information processing device 100 arranges the mathematical model M1, the mathematical model M2, the mathematical model M3, and the mathematical model M4 in descending order of the calculated scores. The information processing device 100 specifies the rank orders of the mathematical model M1, the mathematical model M2, the mathematical model M3, and the mathematical model M4 based on the arrangement result, and stores the rank orders, using the evaluation management table 700.

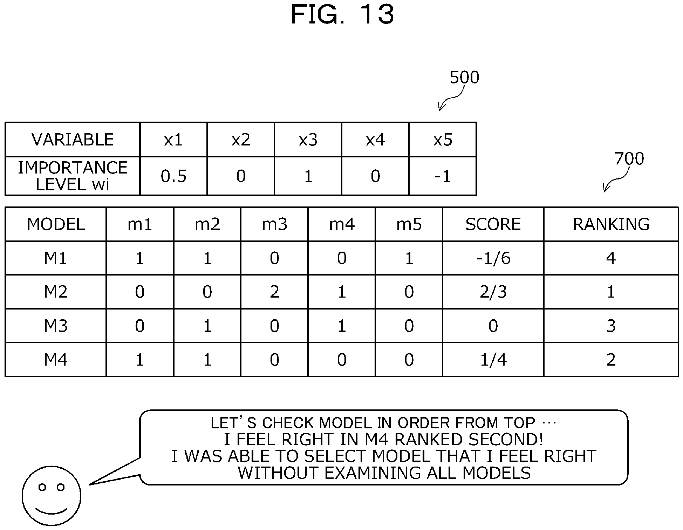

The information processing device 100 refers to the evaluation management table 700 and outputs the scores and the rank orders of the mathematical model M1, the mathematical model M2, the mathematical model M3, and the mathematical model M4 in a graspable manner for the user. The information processing device 100 transmits, for example, the scores and the rank orders of the mathematical model M1, the mathematical model M2, the mathematical model M3, and the mathematical model M4 to the client device 201. In the example of FIG. 12, the user considers there is no need to set the importance levels for other variables. Therefore, the client device 201 transmits an instruction to terminate calculation of the scores and specification of the rank orders to the information processing device 100 based on the user's operation input. In response to the received instruction, the information processing device 100 terminates the calculation of the scores and the specification of the rank orders instead of repetition without outputting the inquiry about the importance levels for other variables. Next, description proceeds to FIG. 13.

In FIG. 13, the user selects the mathematical model that the user considers appropriate with reference to the scores and rank orders of the mathematical model M1, the mathematical model M2, the mathematical model M3, and the mathematical model M4. For example, the user sequentially examines the mathematical models from the mathematical model with a high rank order, and selects the mathematical model that the user considers appropriate. In the example of FIG. 13, the user feels right in the content of the mathematical model M4 ranked second, and determines that the mathematical model M4 is appropriate.

Since the information processing device 100 calculates the score in consideration of the importance level according to the user's intuitive evaluation for the variable, it is possible to enable the user to refer to the ranking table in which the mathematical models that the user is more likely to consider appropriate are arranged in descending order of the scores. Therefore, the user can select the appropriate mathematical model without examining all the mathematical models. Then, the information processing device 100 can reduce the work load on the user when selecting the appropriate mathematical model.

Here, a case where the information processing device 100 transmits the score and the rank order for each mathematical model to the client device 201 every time calculating the score and specifying the rank order for the each mathematical model has been described, but the embodiment is not limited to the case. For example, there may be a case where the information processing device 100 transmits the scores and the rank orders for the respective mathematical models to the client device 201 when accepting the instruction to terminate the calculation of the scores and the specification of the rank orders instead of every time calculating the score and the specifying the rank order.

Here, a case where the information processing device 100 terminates the calculation of the scores and the specification of the rank orders instead of repetition without outputting the inquiry about the importance levels for other variables in response to acceptance of the instruction to terminate the calculation of the scores and the specification of the rank orders has been described, but the embodiment is not limited to the case. For example, there may be a case where, in response to satisfaction of a predetermined condition, the information processing device 100 terminates the calculation of the scores and the specification of the rank orders instead of repetition without outputting the inquiry about the importance levels for other variables. The predetermined condition is that, for example, the score of any mathematical model becomes equal to or greater than a threshold. The predetermined condition is that, for example, a difference between a maximum value and a minimum value of the score becomes equal to or greater than a threshold. Furthermore, for example, there may be a case where the information processing device 100 transmits the scores and the rank orders for the respective mathematical models to the client device 201 when the predetermined condition is satisfied instead of every time calculating the score and the specifying the rank order.

Here, a case where the information processing device 100 selects any variable and transmits the inquiry about the importance level for the selected variable to the client device 201 has been described, but the embodiment is not limited to the case. For example, there may be a case where the user selects any variable. Specifically, there may be a case where the information processing device 100 transmits the information regarding each variable to the client device 201 so as to enable the user to grasp the information. The information regarding the variable is, for example, information indicating the type of the variable, information indicating the name of the variable, or the like. In this case, it is conceivable that the user selects any variable based on the information regarding the variable, and transmits the importance level for the selected variable to the information processing device, using the client device.

Furthermore, for example, there may be a case where the information processing device 100 transmits an inquiry about the importance level for each variable of two or more variables to the client device 201 at a time. Specifically, there may be a case where the information processing device 100 transmits, to the client device 201, an inquiry about the importance levels of a variable predicted to have the largest importance level and a variable predicted to have the smallest importance level, which are set by the user. The variable predicted to have the largest importance level and the variable predicted to have the smallest importance level, which are set by the user, are set by the user of the information processing device 100, for example.

Here, a case where the information processing device 100 does not select again the variable that has been selected once has been described, but the present invention is not limited to the case. For example, there may be a case where the information processing device 100 selects again the variable that has been selected once.

(Operation Example 2 of Information Processing Device 100)

Next, an operation example 2 of the information processing device 100 will be described with reference to FIG.

14. The operation example 1 corresponds to the case of not using the coefficient that appears in the mathematical model when calculating the score that indicates the evaluation for the mathematical model. In contrast, the operation example 2 corresponds to a case of using the coefficient that appears in the mathematical model when calculating the score that indicates the evaluation for the mathematical model.

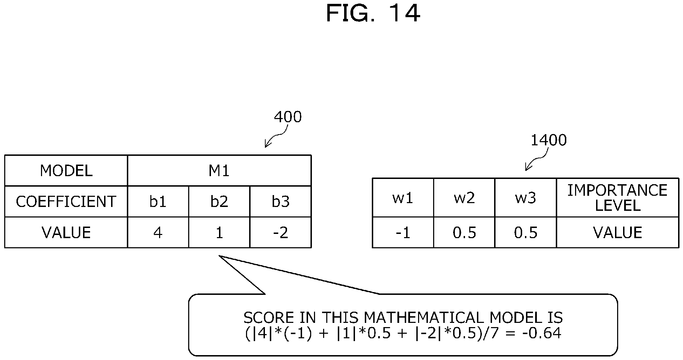

FIG. 14 is an explanatory diagram illustrating the operation example 2 of the information processing device 100. In the operation example 2, when calculating the score, the information processing device 100 calculates the score that indicates the evaluation for each mathematical model using the following expression (2) instead of the above expression (1). $b_i$ is a weight of the coefficient, $w_i$ is the importance level [-1, 1] of $x_i$. $w_i$ is an initial value 0. $w_i$ is set by the user. In the example of FIG. 14, the information processing device 100 calculates the score that indicates the evaluation for the mathematical model based on, for example, the coefficient management table 400 and a list 1400 of the importance levels for the variables that appear in the mathematical model.

$$\text{The score} = (|b_1|*w_1 + ... + |b_n|*w_n)/\Sigma|b_i| \ ... \ (2)$$

Since the information processing device 100 calculates the score in consideration of the importance level according to the user's intuitive evaluation for the variable, it is possible to enable the user to refer to the ranking table in which the mathematical models that the user is more likely to consider appropriate are arranged in descending order of the scores. Therefore, the user can select the appropriate mathematical model without examining all the mathematical models. Then, the information processing device 100 can reduce the work load on the user when selecting the appropriate mathematical model. Furthermore, the information processing device 100 can calculate the score that indicates the evaluation for the mathematical model more accurately in consideration of the coefficient.

(Operation Example 3 of Information Processing Device 100)

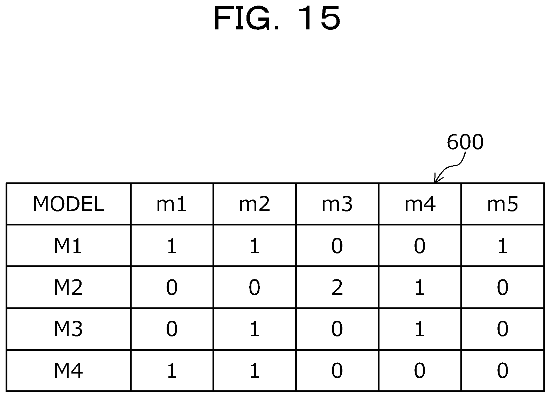

Next, an operation example 3 of the information processing device 100 will be described with reference to FIG. 15. The operation example 1 corresponds to the case of randomly selecting any one of the variable $x_1$, the variable $x_2$, the variable $x_3$, the variable $x_4$, and the variable $x_5$. In contrast, the operation example 3 corresponds to a case of selecting any one of the variable $x_1$, the variable $x_2$, the variable $x_3$, the variable $x_4$, and the variable $x_5$ according to a predetermined rule. The predetermined rule uses the frequency of appearance of each variable in the entire mathematical model M1, mathematical model M2, mathematical model M3, and mathematical model M4.

FIG. 15 is an explanatory table illustrating the operation example 3 of the information processing device 100. In the operation example 3, the information processing device 100 refers to the frequency management table 600 and selects variables in order from a variable with a relatively high frequency of appearance in the entire mathematical model M1, mathematical model M2, mathematical model M3, and mathematical model M4. In the example of FIG. 15, the information processing device 100 specifies that the variable $x_2$ appears three times, the variable $x_1$ appears twice, the variable $x_3$ appears twice, the variable $x_4$ appears twice, and the variable $x_5$ appears once.

Therefore, the information processing device 100 first selects the variable $x_2$, and transmits, to the client device 201, the inquiry about the importance level for the variable $x_2$, which is the evaluation for the selected variable $x_2$. Hereinafter, in the case of selecting other variables, the information processing device 100 selects the variable $x_1$, the variable $x_3$, the variable $x_4$, and the variable $x_5$ in this order. Here, for example, in a case where there are two or more variables that appear the same number of times, the information processing device 100 may randomly select the variable when selecting any variable of the two or more variables that appear the same number of times.

The information processing device 100 can calculate the score that indicates the evaluation for the mathematical model more accurately at an early stage. For example, it is considered that the variable with a relatively high frequency of appearance in the entire mathematical model M1, mathematical model M2, mathematical model M3, and mathematical model M4 has a relatively high degree of influence on the score. Meanwhile, the information processing device 100 can preferentially select the variable with a relatively high frequency of appearance, and can calculate the score that indicates the evaluation for the mathematical model more accurately even if the number of times the user sets the importance level as the evaluation for the variable is relatively small. Therefore, the information processing device 100 can reduce the work load on the user.

(Operation Example 4 of Information Processing Device 100)

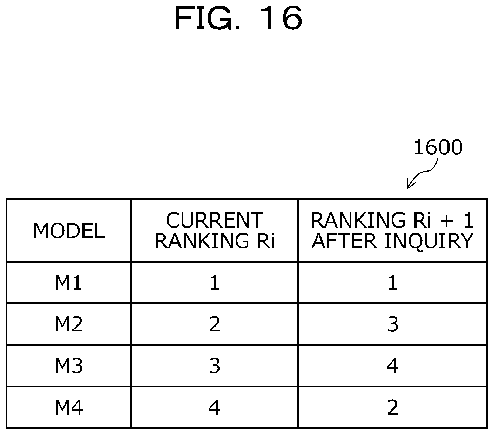

Next, an operation example 4 of the information processing device 100 will be described with reference to FIGs. 16 to 19. The operation example 1 corresponds to the case of randomly selecting any one of the variable $x_1$, the variable $x_2$, the variable $x_3$, and the variable $x_4$. In contrast, the operation example 4 corresponds to a case of selecting any one of the variable $x_1$, the variable $x_2$, the variable $x_3$, and the variable $x_4$ according to a predetermined rule. The predetermined rule uses the degree of influence on the rank order of the mathematical model when the importance level is -1 or +1.

FIGs. 16 to 19 are explanatory diagrams illustrating the operation example 4 of the information processing device 100. In the example of FIGs. 16 to 19, it is assumed that the mathematical model M1, the mathematical model M2, the mathematical model M3, and the mathematical model M4 are present. In the examples of FIGs. 16 to 19, it is assumed that each of the variable x1, the variable x2, the variable x3, and the variable x4 is used in at least any one of the mathematical models. The mathematical model is, for example, $y = b1*x1 + b2*x2 + b3*x3*x2$, or the like. The mathematical model may include a term in which two or more variables are combined.

As illustrated in FIG. 16, the information processing device 100 uses a ranking management table 1600. The ranking management table 1600 has fields of model, current ranking Ri, and ranking Ri + 1 after inquiry. In the field of model, a model name that identifies any one of the plurality of mathematical models is set. In the field of current ranking Ri, the rank order of the any one of the above-described mathematical models is set. In the field of ranking Ri + 1 after inquiry, as the evaluation for any variable, the rank order of the any one of the above-described mathematical models in a case where the importance level is -1 or +1 as a result of transmitting the inquiry about the importance level for the variable is set.

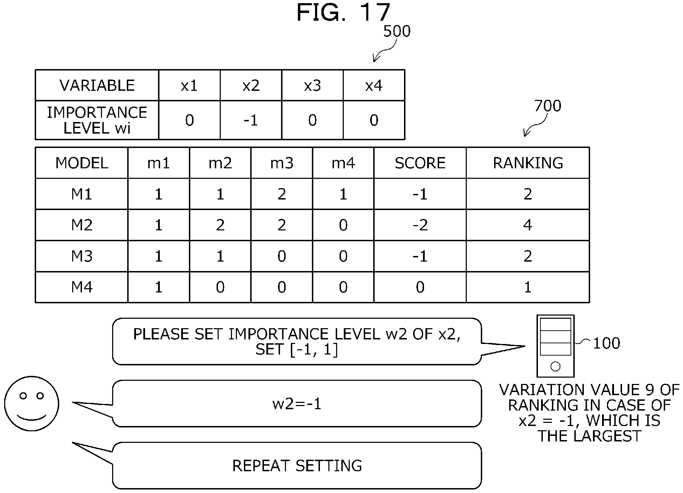

It is assumed that the information processing device 100 stores the initial value of the importance level for each of the variable x1, the variable x2, the variable x3, and the variable x4, using the importance level management table 500. The initial value is, for example, 0. Furthermore, it is assumed that the information processing device 100 stores the evaluation management table 700 in the initial state. The user intends to select the mathematical model by setting the importance level for the variable three times. Next, description proceeds to FIG. 17.

In FIG. 17, the information processing device 100 generates the ranking management table 1600 for each of the variable x1, the variable x2, the variable x3, and the variable x4. Then, in the case of x2 = -1, the information processing device 100 determines that the variation value obtained by adding variations of the rank order is 9, which is the largest variation value, based on the ranking management table 1600. Therefore, the information processing device 100 selects the variable x2. Here, for example, in a case where there are two or more variables with the largest variation value, the information processing device 100 may randomly select a variable from among the variables with the largest variation value.

The information processing device 100 outputs the inquiry about the importance level for the variable x2, which is the evaluation for the selected variable x2, to the user. For example, the information processing device 100 transmits the inquiry about the importance level for the variable x2 to the client device 201.

In the example of FIG. 17, the user sets w2 = -1. The client device 201 transmits w2 = -1 to the information processing device 100 based on the user's operation input. The information processing device 100 stores w2 = -1, using the importance level management table 500. The information processing device 100 refers to the importance level management table 500 and calculates the score that indicates the evaluation for each mathematical model. For example, the information processing device 100 calculates the score according to the above-described expression (1).

The information processing device 100 stores the calculated score, using the evaluation management table 700. The information processing device 100 arranges the mathematical model M1, the mathematical model M2, the mathematical model M3, and the mathematical model M4 in descending order of the calculated scores. The information processing device 100 specifies the rank orders of the mathematical model M1, the mathematical model M2, the mathematical model M3, and the mathematical model M4 based on the arrangement result, and stores the rank orders, using the evaluation management table 700.

The information processing device 100 refers to the evaluation management table 700 and outputs the scores and the rank orders of the mathematical model M1, the mathematical model M2, the mathematical model M3, and the mathematical model M4 in a graspable manner for the user. The information processing device 100 transmits, for example, the scores and the rank orders of the mathematical model M1, the mathematical model M2, the mathematical model M3, and the mathematical model M4 to the client device 201.

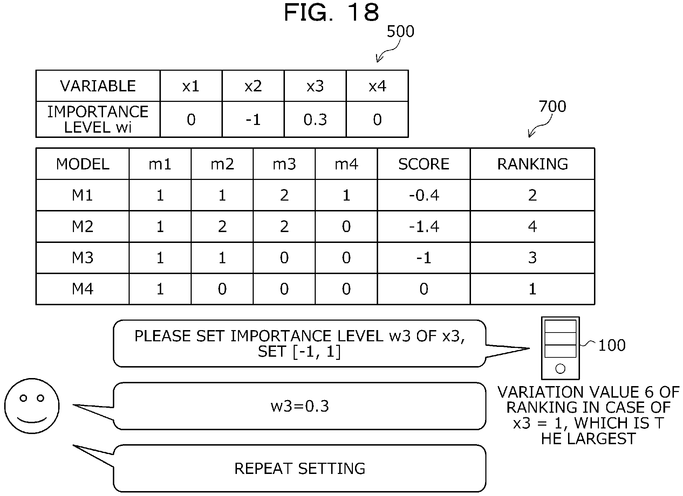

In the example of FIG. 17, the user further desires to set the importance levels for other variables. For example, the user desires to set the importance levels for other variables after referring to the scores and the rank orders of the mathematical model M1, the mathematical model M2, the mathematical model M3, and the mathematical model M4. For example, the user may desire to set the importance levels for other variables without referring to the scores and the rank orders of the mathematical model M1, the mathematical model M2, the mathematical model M3, and the mathematical model M4. The client device 201 transmits the instruction to repeat the setting to the information processing device 100 based on the user's operation input. Next, description proceeds to FIG. 18.

In FIG. 18, since the information processing device 100 has received the instruction to repeat the setting, the information processing device 100 generates the ranking management table 1600 for each of the variable x1, the variable x3, and the variable x4 that have not yet been selected. Then, in the case of x3 = 1, the information processing device 100 determines that the variation value obtained by adding variations of the rank order is 6, which is the largest variation value, based on the ranking management table 1600. Therefore, the information processing device 100 selects the variable x3. The information processing device 100 outputs the inquiry about the importance level for the variable x3, which is the evaluation for the selected variable x3, to the user. For example, the information processing device 100 transmits the inquiry about the importance level for the variable x3 to the client device 201.

In the example of FIG. 18, the user sets w3 = 0.3. The client device 201 transmits w3 = 0.3 to the information processing device 100 based on the user's operation input. The information processing device 100 stores w3 = 0.3, using the importance level management table 500. The information processing device 100 refers to the importance level management table 500 and calculates the score that indicates the evaluation for each mathematical model. For example, the information processing device 100 calculates the score according to the above-described expression (1).

The information processing device 100 stores the calculated score, using the evaluation management table 700. The information processing device 100 arranges the mathematical model M1, the mathematical model M2, the mathematical model M3, and the mathematical model M4 in descending order of the calculated scores. The information processing device 100 specifies the rank orders of the mathematical model M1, the mathematical model M2, the mathematical model M3, and the mathematical model M4 based on the arrangement result, and stores the rank orders, using the evaluation management table 700.

The information processing device 100 refers to the evaluation management table 700 and outputs the scores and the rank orders of the mathematical model M1, the mathematical model M2, the mathematical model M3, and the mathematical model M4 in a graspable manner for the user. The information processing device 100 transmits, for example, the scores and the rank orders of the mathematical model M1, the mathematical model M2, the mathematical model M3, and the mathematical model M4 to the client device 201.

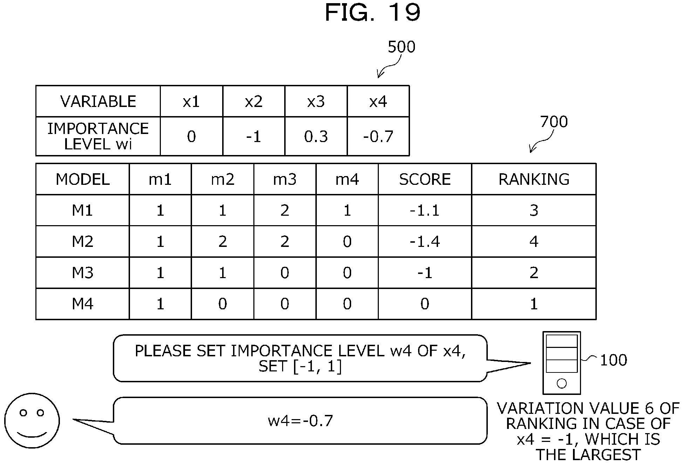

In the example of FIG. 18, the user further desires to set the importance levels for other variables. For example, the user desires to set the importance levels for other variables after referring to the scores and the rank orders of the mathematical model M1, the mathematical model M2, the mathematical model M3, and the mathematical model M4. For example, the user may desire to set the importance levels for other variables without referring to the scores and the rank orders of the mathematical model M1, the mathematical model M2, the mathematical model M3, and the mathematical model M4. The client device 201 transmits the instruction to repeat the setting to the information processing device 100 based on the user's operation input. Next, description proceeds to FIG. 19.

In FIG. 19, since the information processing device 100 has received the instruction to repeat the setting, the information processing device 100 generates the ranking management table 1600 for each of the variable x1 and the variable x4 that have not yet been selected. Then, in the case of x4 = -1, the information processing device 100 determines that the variation value obtained by adding variations of the rank order is 6, which is the largest variation value, based on the ranking management table 1600. Therefore, the information processing device 100 selects the variable x4. The information processing device 100 outputs the inquiry about the importance level for the variable x4, which is evaluation for the selected variable x4, to the user. For example, the information processing device 100 transmits the inquiry about the importance level for the variable x4 to the client device 201.

In the example of FIG. 19, the user sets w4 = -0.7. The client device 201 transmits w4 = -0.7 to the information processing device 100 based on the user's operation input. The information processing device 100 stores w4 = -0.7, using the importance level management table 500. The information processing device 100 refers to the importance level management table 500 and calculates the score that indicates the evaluation for each mathematical model. For example, the information processing device 100 calculates the score according to the above-described expression (1).

The information processing device 100 stores the calculated score, using the evaluation management table 700. The information processing device 100 arranges the mathematical model M1, the mathematical model M2, the mathematical model M3, and the mathematical model M4 in descending order of the calculated scores. The information processing device 100 specifies the rank orders of the mathematical model M1, the mathematical model M2, the mathematical model M3, and the mathematical model M4 based on the arrangement result, and stores the rank orders, using the evaluation management table 700.

The information processing device 100 refers to the evaluation management table 700 and outputs the scores and the rank orders of the mathematical model M1, the mathematical model M2, the mathematical model M3, and the mathematical model M4 in a graspable manner for the user. The information processing device 100 transmits, for example, the scores and the rank orders of the mathematical model M1, the mathematical model M2, the mathematical model M3, and the mathematical model M4 to the client device 201. In the example of FIG. 19, the user considers there is no need to set the importance levels for other variables. The user selects the mathematical model that the user considers appropriate with reference to the scores and rank orders of the mathematical model M1, the mathematical model M2, the mathematical model M3, and the mathematical model M4. For example, the user sequentially examines the mathematical models from the mathematical model with a high rank order, and selects the mathematical model that the user considers appropriate.

Since the information processing device 100 calculates the score in consideration of the importance level according to the user's intuitive evaluation for the variable, it is possible to enable the user to refer to the ranking table in which the mathematical models that the user is more likely to consider appropriate are arranged in descending order of the scores. Therefore, the user can select the appropriate mathematical model without examining all the mathematical models. Then, the information processing device 100 can reduce the work load on the user when selecting the appropriate mathematical model.

The information processing device 100 can calculate the score that indicates the evaluation for the mathematical model more accurately at an early stage. For example, the variable with a relatively large variation value is considered to be an important variable that has a relatively large influence on the rank order of each mathematical model. Meanwhile, the information processing device 100 can preferentially select the variable with a relatively large variation value, and can calculate the score that indicates the evaluation for the mathematical model more accurately even if the number of times the user sets the importance level as the evaluation for the variable is relatively small. Therefore, the information processing device 100 can reduce the work load on the user.

Here, a case where the information processing device 100 selects the variable with the largest variation value has been described, but the embodiment is not limited to the case. For example, there may be a case where the information processing device 100 randomly selects the variable from among the variables with the variation value equal to or greater than a threshold.

(Overall Processing Procedure)

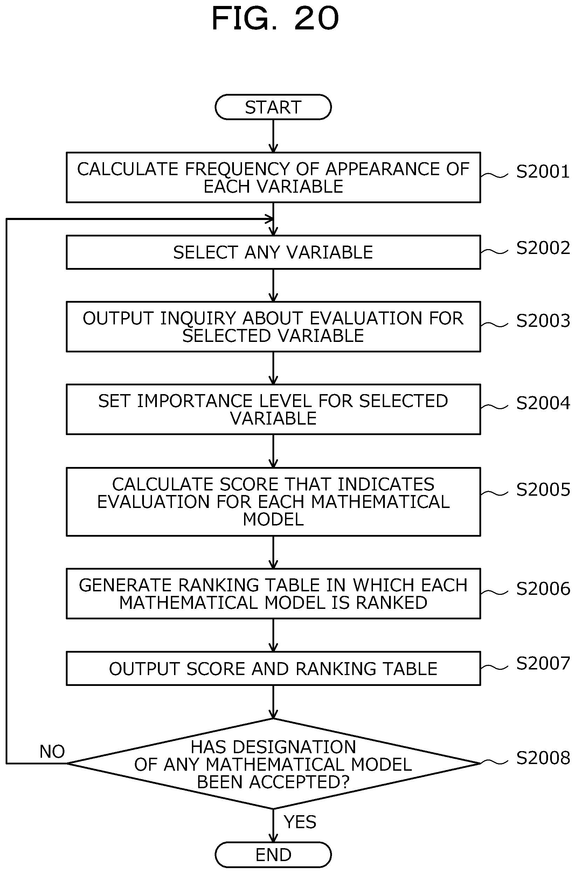

Next, an example of an overall processing procedure executed by the information processing device 100 will be described with reference to FIG. 20. Overall processing is implemented by, for example, the CPU 301, the storage area such as the memory 302 or the recording medium 305, and the network I/F 303 illustrated in FIG. 3.

FIG. 20 is a flowchart illustrating an example of the overall processing procedure. In FIG. 20, the information processing device 100 calculates the frequency of appearance of each variable of the plurality of variables in each mathematical model of the plurality of mathematical models (step S2001).

Next, the information processing device 100 selects any variable of the plurality of variables (step S2002). Then, the information processing device 100 outputs the inquiry about the evaluation for the selected variable to the user (step S2003).

Next, the information processing device 100 acquires the evaluation for the selected variable, and sets the importance level for the selected variable based on the acquired evaluation (step S2004). Then, the information processing device 100 calculates the score that indicates the evaluation for each mathematical model of the plurality of mathematical models based on the importance level set for each variable of the plurality of variables and the frequency of appearance of the each variable of the plurality of variables (step S2005).

Next, the information processing device 100 generates the ranking table in which the respective mathematical models of the plurality of mathematical models are ranked based on the calculated scores (step S2006). Then, the information processing device 100 outputs the calculated scores and the generated ranking table so as to enable the user to refer to the scores and table (step S2007).

Next, the information processing device 100 determines whether designation of any mathematical model by the user has been accepted (step S2008). Here, in a case where the designation of any mathematical model has not been accepted (step S2008: No), the information processing device 100 returns to the processing of step S2002. On the other hand, in a case where the designation of any mathematical model has been accepted (step S2008: Yes), the information processing device 100 terminates the entire processing. Thereby, the information processing device 100 can facilitate the user to select the mathematical model.

Here, the information processing device 100 may switch some steps in the processing order in FIG. 20 and execute the processing. For example, the processing of step S2001 may be performed after the processing of step S2004. Furthermore, the information processing device 100 may omit some steps in the processing in FIG. 20. For example, the processing of step S2008 can be omitted.

As described above, according to the information processing device 100, it is possible to acquire the evaluation for any variable that appears in at least any mathematical model of a plurality of mathematical models from among a plurality of variables. According to the information processing device 100, it is possible to specify the frequency of appearance of each variable of the plurality of variables in each mathematical model of the plurality of mathematical models. According to the information processing device 100, it is possible to determine the evaluation for each mathematical model based on the importance level for any variable set according to the acquired evaluation and the specified frequency. Thereby, the information processing device 100 can enable the user to use the evaluation for each mathematical model that serves as a guideline when the user selects the mathematical model that the user considers appropriate. Therefore, the information processing device 100 can facilitate the user to select the mathematical model that the user considers appropriate.

According to the information processing device 100, it is possible to acquire the preset importance level for each variable of the remaining variables other than the any variable among the plurality of variables. According to the information processing device 100, it is possible to determine the evaluation for each mathematical model based on the importance level for each variable of the plurality of variables including the importance level for any variable set according to the acquired evaluation and the specified frequency. Thereby, the information processing device 100 can improve the accuracy of determining the evaluation for each mathematical model based on the importance level for each variable of the plurality of variables.

According to the information processing device 100, it is possible to output the information regarding each mathematical model in a mode corresponding to the evaluation determined for the mathematical model. Thereby, the information processing device 100 can enable the user to refer to the evaluation for each mathematical model when the user selects the mathematical model that the user considers appropriate. Therefore, the information processing device 100 can facilitate the user to select the mathematical model that the user considers appropriate.

According to the information processing device 100, it is possible to output the information regarding the evaluation determined for each mathematical model. Thereby, the information processing device 100 can enable the user to refer to the evaluation for each mathematical model when the user selects the mathematical model that the user considers appropriate. Therefore, the information processing device 100 can facilitate the user to select the mathematical model that the user considers appropriate.

According to the information processing device 100, it is possible to select the variable that has not yet been selected from among the plurality of variables. According to the information processing device 100, it is possible to acquire the evaluation from the user for the variable selected this time every time the variable that has not yet been selected is selected from among the plurality of variables. According to the information processing device 100, it is possible to determine the evaluation for each mathematical model based on the importance level set according to the evaluation for the variable for which the evaluation from the user has been acquired among the plurality of variables and the specified frequency every time the evaluation from the user is acquired. Thereby, the information processing device 100 can avoid selecting the already selected variable again, and can reduce the work load on the user. Furthermore, the information processing device 100 can more accurately determine the evaluation for each mathematical model every time the variable is selected.

According to the information processing device 100, it is possible to execute the processing of selecting in the case where the variable that has not yet been selected remains among the plurality of variables. Thereby, the information processing device 100 can repeat the selection of variables, and can improve the accuracy of determining the evaluation for each mathematical model.

According to the information processing device 100, it is possible to execute the processing of selecting according to the instruction from the user. Thereby, the information processing device 100 can repeat the selection of variables, and can improve the accuracy of determining the evaluation for each mathematical model. Furthermore, the information processing device 100 can terminate the selection of variables without repeating the selection of variables according to the instruction from the user, and can reduce the work load on the user.

According to the information processing device 100, it is possible to specify the degree of variation in the evaluation for each mathematical model in the case where the evaluation for each variable from the user satisfies a predetermined condition. According to the information processing device 100, it is possible to select the variable with the specified degree of variation that is relatively high from among the variables included in the plurality of variables and which have not yet been selected. Thereby, the information processing device 100 can select the variable in consideration of which variable has a relatively large degree of variation in the evaluation for the mathematical model in the case where the variable has relatively high evaluation or relatively low evaluation. Therefore, the information processing device 100 can improve a probability that the user can easily select the mathematical model when determining the evaluation for the selected variable. Then, the information processing device 100 can determine the evaluation for each mathematical model so that the user can easily select the mathematical model that the user intuitively considers appropriate.

According to the information processing device 100, it is possible to specify the amount of appearance of each variable in the plurality of mathematical models. According to the information processing device 100, it is possible to select the variable with the specified amount that is relatively large from among the variables included in the plurality of variables and which have not yet been selected. Thereby, the information processing device 100 can select any variable in consideration of which variable has a relatively large number of mathematical models on which the variable has an influence. Therefore, the information processing device 100 can improve a probability that the user can easily select the mathematical model when determining the evaluation for the selected variable. Then, the information processing device 100 can determine the evaluation for each mathematical model so that the user can easily select the mathematical model that the user intuitively considers appropriate.

According to the information processing device 100, it is possible to randomly select the variable included in the plurality of variables and which has not yet been selected. Thereby, the information processing device 100 can avoid selecting the already selected variable again, and can reduce the work load on the user.

According to the information processing device 100, it is possible to execute the processing of selecting until designation of any mathematical model of the plurality of mathematical models is accepted. The information processing device 100 can terminate the selection of variables without repeating the selection of variables according to the designation of any mathematical model, and can reduce the work load on the user.

According to the information processing device 100, it is possible to determine the evaluation for each mathematical model based on the importance level for any variable set according to the acquired evaluation, the specified frequency, and the coefficient according to the term that appears in the each mathematical model. Thereby, the information processing device 100 can improve the accuracy of determining the evaluation for each mathematical model.

According to the information processing device 100, it is possible to use the mathematical model including the term formed by combining two or more variables of the plurality of variables. Thereby, the information processing device 100 can be applied to a case where various mathematical models are present.

According to the information processing device 100, it is possible to acquire the answer from the user that indicates the evaluation for any variable. According to the information processing device 100, it is possible to set the importance level for any variable based on the acquired answer with reference to the information that enables conversion of the answer into the importance level for any variable. Thereby, the information processing device 100 can convert the answer from the user into the importance level and use the importance level. Therefore, the information processing device 100 allows the user to input a non-numerical answer, and can improve the convenience.

Note that the information processing method described in the present embodiment may be implemented by executing a program prepared in advance on a computer such as a PC or a workstation. The information processing program described in the present embodiment is executed by being recorded on a computer-readable recording medium and being read from the recording medium by the computer. The recording medium is a hard disk, a flexible disk, a compact disc (CD)-ROM, a magneto-optical disc (MO), a digital versatile disc (DVD), or the like. Furthermore, the information processing program described in the present embodiment may be distributed via a network such as the Internet.

CITATION LIST

NON-PATENT DOCUMENT

Non-Patent Document 1: Hara, Satoshi, and Takanori Maehara. "Enumerate lasso solutions for feature selection." Thirty-First AAAI Conference on Artificial Intelligence. 2017.

Non-Patent Document 2: Hara, Satoshi, and Masakazu Ishihata. "Approximate and Exact Enumeration of Rule Models." AAAI. 2018.

REFERENCE SIGNS LIST

| | |
|---|---|
| 100 | Information processing device |
| 200 | Information processing system |
| 201 | Client device |
| 210 | Network |
| 300 | Bus |
| 301 | CPU |
| 302 | Memory |
| 303 | Network I/F |
| 304 | Recording medium I/F |
| 305 | Recording medium |
| 400 | Coefficient management table |
| 500 | Importance level management table |
| 600 | Frequency management table |
| 700 | Evaluation management table |
| 800 | Storage unit |
| 801 | Acquisition unit |
| 802 | Specifying unit |
| 803 | Determination unit |
| 804 | Output unit |
| 1400 | List |
| 1600 | Ranking management table |

**Claims**

1. An information processing program for causing a computer to execute processing comprising:

   acquiring evaluation for any variable that appears in at least any mathematical model of a plurality of mathematical models among a plurality of variables;
   specifying a frequency of appearance of each variable of the plurality of variables in each mathematical model of the plurality of mathematical models; and
   determining evaluation for the each mathematical model based on an importance level for the any variable set according to the acquired evaluation and the specified frequency.

2. The information processing program according to claim 1, wherein

   the determining includes
   determining the evaluation for the each mathematical model based on the importance level for the any variable set according to the acquired evaluation, an importance level preset for each variable of remaining variables other than the any variable among the plurality of variables, and the specified frequency.

3. The information processing program according to claim 1 or 2, the processing further comprising:
   outputting information regarding the each mathematical model in a mode that corresponds to the evaluation determined for the mathematical model.

4. The information processing program according to any one of claims 1 to 3, wherein information regarding the evaluation determined for the each mathematical model is output.

5. The information processing program according to any one of claims 1 to 4, the processing further comprising:

   selecting a variable that has not yet been selected from among the plurality of variables, wherein
   the acquiring includes
   acquiring, every time the variable that has not yet been selected is selected from among the plurality of variables, evaluation from a user for the variable selected this time, and
   the determining includes
   determining, every time the evaluation from the user is acquired, the evaluation for the each mathematical model based on an importance level set according to the evaluation for the variable for which the evaluation from the user has been acquired among the plurality of variables, and the specified frequency.

6. The information processing program according to claim 5, wherein
   the selecting is executed in a case where a variable that has not yet been selected remains among the plurality of variables.

7. The information processing program according to claim 5 or 6, wherein
   the selecting is executed in response to an instruction from the user.

8. The information processing program according to any one of claims 5 to 7, the processing further comprising:

   specifying a degree of variation in the evaluation for the each mathematical model in a case where the evaluation from the user for the each variable satisfies a predetermined condition, wherein
   the selecting includes
   selecting a variable with the specified degree of variation that is relatively high from among variables that are included in the plurality of variables and have not yet been selected.

9. The information processing program according to any one of claims 5 to 8, the processing further comprising:

   specifying an amount in which the each variable appears in the plurality of mathematical models, wherein
   the selecting includes
   selecting a variable with the specified amount that is relatively large from among variables that are included in the plurality of variables and have not yet been selected.

10. The information processing program according to any one of claims 5 to 9, wherein the selecting includes randomly selecting a variable that is included in the plurality of variables and has not yet been selected.

11. The information processing program according to any one of claims 5 to 10, wherein
the selecting is executed until designation of any mathematical model of the plurality of mathematical models is accepted.

12. The information processing program according to any one of claims 1 to 11, wherein

the determining includes
determining the evaluation for the each mathematical model based on the importance level for the any variable set according to the acquired evaluation, the specified frequency, and a coefficient according to a term that appears in the each mathematical model.

13. The information processing program according to any one of claims 1 to 12, wherein the mathematical model includes a term formed by combining two or more variables among the plurality of variables.

14. The information processing program according to any one of claims 1 to 13, wherein

the acquiring includes
acquiring an answer from a user that indicates the evaluation for any variable, and setting the importance level for the any variable based on the acquired answer with reference to information that enables conversion of the answer into the importance level for the any variable.

15. An information processing method implemented by a computer, the method comprising:

acquiring evaluation for any variable that appears in at least any mathematical model of a plurality of mathematical models among a plurality of variables;
specifying a frequency of appearance of each variable of the plurality of variables in each mathematical model of the plurality of mathematical models; and
determining evaluation for the each mathematical model based on an importance level for the any variable set according to the acquired evaluation and the specified frequency.

16. An information processing apparatus comprising a control unit configured to:

acquire evaluation for any variable that appears in at least any mathematical model of a plurality of mathematical models among a plurality of variables;
specify a frequency of appearance of each variable of the plurality of variables in each mathematical model of the plurality of mathematical models; and
determine evaluation for the each mathematical model based on an importance level for the any variable set according to the acquired evaluation and the specified frequency.

# FIG. 1

PLEASE SET IMPORTANCE LEVEL OF x5
SET [-1, 1]

100

x5=0.7

CURRENT RANKING AND SCORES ARE AS FOLLOWS:
M4: 0.9, M3: 0.5, M1: -0.2, AND M2: -0.8

100

CHECK TOP MATHEMATICAL MODEL

# FIG. 2

# FIG. 3

# FIG. 4

400

| MODEL | M1 | | |
|---|---|---|---|
| COEFFICIENT | b1 | b2 | b3 |
| VALUE | 4 | 1 | -2 |

400-1

# FIG. 5

| VARIABLE | x1 | x2 | x3 | x4 | x5 |
|---|---|---|---|---|---|
| IMPORTANCE LEVEL wi | 0 | 0 | 0 | 0 | 0 |

500

500-1

# FIG. 6

600

| MODEL | m1 | m2 | m3 | m4 | m5 |
|-------|----|----|----|----|----|
| M1 | 1 | 1 | 0 | 0 | 1 |
| M2 | 0 | 0 | 2 | 1 | 0 |
| M3 | 0 | 1 | 0 | 1 | 0 |
| M4 | 1 | 1 | 0 | 0 | 0 |

600-1

FIG. 7

700

| MODEL | m1 | m2 | m3 | m4 | m5 | SCORE | RANKING |
|-------|----|----|----|----|----|-------|---------|
| M1 | 1 | 1 | 0 | 0 | 1 | 0 | 1 |
| M2 | 0 | 0 | 2 | 1 | 0 | 0 | 1 |
| M3 | 0 | 1 | 0 | 1 | 0 | 0 | 1 |
| M4 | 1 | 1 | 0 | 0 | 0 | 0 | 1 |

700-1

FIG. 8

# FIG. 9

500

| VARIABLE | x1 | x2 | x3 | x4 | x5 |
|---|---|---|---|---|---|
| IMPORTANCE LEVEL wi | 0 | 0 | 0 | 0 | 0 |

700

| MODEL | m1 | m2 | m3 | m4 | m5 | SCORE | RANKING |
|---|---|---|---|---|---|---|---|
| M1 | 1 | 1 | 0 | 0 | 1 | 0 | 1 |
| M2 | 0 | 0 | 2 | 1 | 0 | 0 | 1 |
| M3 | 0 | 1 | 0 | 1 | 0 | 0 | 1 |
| M4 | 1 | 1 | 0 | 0 | 0 | 0 | 1 |

SET IMPORTANCE LEVEL THREE TIMES AND SELECT MATHEMATICAL MODEL

# FIG. 10

500

700

| VARIABLE | x1 | x2 | x3 | x4 | x5 |
|---|---|---|---|---|---|
| IMPORTANCE LEVEL wi | 0.5 | 0 | 0 | 0 | 0 |

| MODEL | m1 | m2 | m3 | m4 | m5 | SCORE | RANKING |
|---|---|---|---|---|---|---|---|
| M1 | 1 | 1 | 0 | 0 | 1 | 1/6 | 2 |
| M2 | 0 | 0 | 2 | 1 | 0 | 0 | 3 |
| M3 | 0 | 1 | 0 | 1 | 0 | 0 | 3 |
| M4 | 1 | 1 | 0 | 0 | 0 | 1/4 | 1 |

PLEASE SET IMPORTANCE LEVEL w1 OF x1, SET [-1, 1]

100

w1=0.5

REPEAT SETTING

# FIG. 11

500

700

| VARIABLE | x1 | x2 | x3 | x4 | x5 |
|---|---|---|---|---|---|
| IMPORTANCE LEVEL wi | 0.5 | 0 | 0 | 0 | -1 |

| MODEL | m1 | m2 | m3 | m4 | m5 | SCORE | RANKING |
|---|---|---|---|---|---|---|---|
| M1 | 1 | 1 | 0 | 0 | 1 | -1/6 | 4 |
| M2 | 0 | 0 | 2 | 1 | 0 | 0 | 2 |
| M3 | 0 | 1 | 0 | 1 | 0 | 0 | 2 |
| M4 | 1 | 1 | 0 | 0 | 0 | 1/4 | 1 |

PLEASE SET IMPORTANCE LEVEL w5 OF x5, SET [-1, 1]

100

w5=-1

REPEAT SETTING

# FIG. 12

500

| VARIABLE | x1 | x2 | x3 | x4 | x5 |
|---|---|---|---|---|---|
| IMPORTANCE LEVEL wi | 0.5 | 0 | 1 | 0 | -1 |

700

| MODEL | m1 | m2 | m3 | m4 | m5 | SCORE | RANKING |
|---|---|---|---|---|---|---|---|
| M1 | 1 | 1 | 0 | 0 | 1 | -1/6 | 4 |
| M2 | 0 | 0 | 2 | 1 | 0 | 2/3 | 1 |
| M3 | 0 | 1 | 0 | 1 | 0 | 0 | 3 |
| M4 | 1 | 1 | 0 | 0 | 0 | 1/4 | 2 |

PLEASE SET IMPORTANCE LEVEL w3 OF x3, SET [-1, 1]

100

w3=1

SETTING ENDS

# FIG. 13

500

700

| VARIABLE | x1 | x2 | x3 | x4 | x5 |
|---|---|---|---|---|---|
| IMPORTANCE LEVEL wi | 0.5 | 0 | 1 | 0 | -1 |

| MODEL | m1 | m2 | m3 | m4 | m5 | SCORE | RANKING |
|---|---|---|---|---|---|---|---|
| M1 | 1 | 1 | 0 | 0 | 1 | -1/6 | 4 |
| M2 | 0 | 0 | 2 | 1 | 0 | 2/3 | 1 |
| M3 | 0 | 1 | 0 | 1 | 0 | 0 | 3 |
| M4 | 1 | 1 | 0 | 0 | 0 | 1/4 | 2 |

LET'S CHECK MODEL IN ORDER FROM TOP ···
I FEEL RIGHT IN M4 RANKED SECOND!
I WAS ABLE TO SELECT MODEL THAT I FEEL RIGHT
WITHOUT EXAMINING ALL MODELS

FIG. 14

400

| MODEL | M1 | | |
|---|---|---|---|
| COEFFICIENT | b1 | b2 | b3 |
| VALUE | 4 | 1 | -2 |

1400

| w1 | w2 | w3 | IMPORTANCE LEVEL |
|---|---|---|---|
| -1 | 0.5 | 0.5 | VALUE |

SCORE IN THIS MATHEMATICAL MODEL IS
(|4|*(-1) + |1|*0.5 + |-2|*0.5)/7 = -0.64

# FIG. 15

600

| MODEL | m1 | m2 | m3 | m4 | m5 |
|-------|----|----|----|----|----|
| M1 | 1 | 1 | 0 | 0 | 1 |
| M2 | 0 | 0 | 2 | 1 | 0 |
| M3 | 0 | 1 | 0 | 1 | 0 |
| M4 | 1 | 1 | 0 | 0 | 0 |

# FIG. 16

1600

| MODEL | CURRENT RANKING Ri | RANKING Ri + 1 AFTER INQUIRY |
|-------|--------------------|-----------------------------|
| M1 | 1 | 1 |
| M2 | 2 | 3 |
| M3 | 3 | 4 |
| M4 | 4 | 2 |

## FIG. 17

500

| VARIABLE | x1 | x2 | x3 | x4 |
|---|---|---|---|---|
| IMPORTANCE LEVEL wi | 0 | -1 | 0 | 0 |

700

| MODEL | m1 | m2 | m3 | m4 | SCORE | RANKING |
|---|---|---|---|---|---|---|
| M1 | 1 | 1 | 2 | 1 | -1 | 2 |
| M2 | 1 | 2 | 2 | 0 | -2 | 4 |
| M3 | 1 | 1 | 0 | 0 | -1 | 2 |
| M4 | 1 | 0 | 0 | 0 | 0 | 1 |

PLEASE SET IMPORTANCE LEVEL w2 OF x2, SET [-1, 1]

100

w2=-1

VARIATION VALUE 9 OF RANKING IN CASE OF x2 = -1, WHICH IS THE LARGEST

REPEAT SETTING

# FIG. 18

500

| VARIABLE | x1 | x2 | x3 | x4 |
|---|---|---|---|---|
| IMPORTANCE LEVEL wi | 0 | -1 | 0.3 | 0 |

700

| MODEL | m1 | m2 | m3 | m4 | SCORE | RANKING |
|---|---|---|---|---|---|---|
| M1 | 1 | 1 | 2 | 1 | -0.4 | 2 |
| M2 | 1 | 2 | 2 | 0 | -1.4 | 4 |
| M3 | 1 | 1 | 0 | 0 | -1 | 3 |
| M4 | 1 | 0 | 0 | 0 | 0 | 1 |

PLEASE SET IMPORTANCE LEVEL w3 OF x3, SET [-1, 1]

~100

w3=0.3

VARIATION VALUE 6 OF RANKING IN CASE OF x3 = 1, WHICH IS THE LARGEST

REPEAT SETTING

# FIG. 19

500

| VARIABLE | x1 | x2 | x3 | x4 |
|---|---|---|---|---|
| IMPORTANCE LEVEL wi | 0 | -1 | 0.3 | -0.7 |

700

| MODEL | m1 | m2 | m3 | m4 | SCORE | RANKING |
|---|---|---|---|---|---|---|
| M1 | 1 | 1 | 2 | 1 | -1.1 | 3 |
| M2 | 1 | 2 | 2 | 0 | -1.4 | 4 |
| M3 | 1 | 1 | 0 | 0 | -1 | 2 |
| M4 | 1 | 0 | 0 | 0 | 0 | 1 |

PLEASE SET IMPORTANCE LEVEL w4 OF x4, SET [-1, 1]

~100

w4=-0.7

VARIATION VALUE 6 OF RANKING IN CASE OF x4 = -1, WHICH IS THE LARGEST

# FIG. 20

```
                      ┌─────────────┐
                      │    START    │
                      └──────┬──────┘
                             │
                             ▼
          ┌──────────────────────────────────────┐
          │ CALCULATE FREQUENCY OF APPEARANCE OF  │──╲ S2001
          │            EACH VARIABLE              │
          └──────────────────┬───────────────────┘
                             │
                             ▼
          ┌──────────────────────────────────────┐
          │          SELECT ANY VARIABLE         │──╲ S2002
          └──────────────────┬───────────────────┘
                             │
                             ▼
          ┌──────────────────────────────────────┐
          │ OUTPUT INQUIRY ABOUT EVALUATION FOR   │──╲ S2003
          │           SELECTED VARIABLE           │
          └──────────────────┬───────────────────┘
                             │
                             ▼
          ┌──────────────────────────────────────┐
          │  SET IMPORTANCE LEVEL FOR SELECTED    │──╲ S2004
          │              VARIABLE                 │
          └──────────────────┬───────────────────┘
                             │
                             ▼
          ┌──────────────────────────────────────┐
          │   CALCULATE SCORE THAT INDICATES      │──╲ S2005
          │  EVALUATION FOR EACH MATHEMATICAL     │
          │              MODEL                    │
          └──────────────────┬───────────────────┘
                             │
                             ▼
          ┌──────────────────────────────────────┐
          │ GENERATE RANKING TABLE IN WHICH EACH  │──╲ S2006
          │    MATHEMATICAL MODEL IS RANKED       │
          └──────────────────┬───────────────────┘
                             │
                             ▼
          ┌──────────────────────────────────────┐
          │    OUTPUT SCORE AND RANKING TABLE     │──╲ S2007
          └──────────────────┬───────────────────┘
                             │
                             ▼
                        ╱─────────╲
              NO      ╱   HAS DESIGNATION  ╲
          ◄─────────╱  OF ANY MATHEMATICAL  ╲──╲ S2008
                    ╲    MODEL BEEN ACCEPTED? ╱
                      ╲───────────┬─────────╱
                             │ YES
                             ▼
                      ┌─────────────┐
                      │     END     │
                      └─────────────┘
```

| INTERNATIONAL SEARCH REPORT | International application No. |
|---|---|
| | PCT/JP2020/049016 |

A. CLASSIFICATION OF SUBJECT MATTER
G06N 20/00(2019.01)i
FI: G06N20/00

According to International Patent Classification (IPC) or to both national classification and IPC

B. FIELDS SEARCHED

Minimum documentation searched (classification system followed by classification symbols)
G06N20/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-86706 A (FUJITSU LTD.) 23 April 2009 (2009-04-23) paragraphs [0002]-[0007], [0014]-[0018], [0025]-[0030] | 1–16 |
| A | CN 109800048 A (MAGIC ENGINE TECHNOLOGY CO., LTD.) 24 May 2019 (2019-05-24) paragraphs [0042]-[0045], [0066] | 1–16 |

☐ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 January 2021 (25.01.2021) | 16 February 2021 (16.02.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

International application No.

PCT/JP2020/049016

| Patent Documents referred in the Report | Publication Date | Patent Family | Publication Date |
|---|---|---|---|
| JP 2009-86706 A | 23 Apr. 2009 | US 2009/0089023 A1 paragraphs [0005]-[0009], [0059]-[0063], [0070]-[0075] | |
| CN 109800048 A | 24 May 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HARA, SATOSHI ; TAKANORI MAEHARA.** Enumerate lasso solutions for feature selection. *Thirty-First AAAI Conference on Artificial Intelligence,* 2017

- **HARA, SATOSHI ; MASAKAZU ISHIHATA.** Approximate and Exact Enumeration of Rule Models. *AAAI,* 2018